(19) **Europäisches Patentamt / European Patent Office / Office européen des brevets**

(11) **EP 4 604 554 A1**

(12) **EUROPEAN PATENT APPLICATION**
published in accordance with Art. 153(4) EPC

(43) Date of publication:
**20.08.2025 Bulletin 2025/34**

(21) Application number: **22961764.2**

(22) Date of filing: **13.10.2022**

(51) International Patent Classification (IPC):
***H04N 19/82*** *(2014.01)*

(52) Cooperative Patent Classification (CPC):
**H04N 19/82**

(86) International application number:
**PCT/CN2022/125230**

(87) International publication number:
**WO 2024/077575 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventor: **DAI, Zhenyu**
**Dongguan, Guangdong 523860 (CN)**

(74) Representative: **Mewburn Ellis LLP**
**Aurora Building**
**Counterslip**
**Bristol BS1 6BX (GB)**

(54) **NEURAL NETWORK BASED LOOP FILTER METHOD, VIDEO ENCODING METHOD AND APPARATUS, VIDEO DECODING METHOD AND APPARATUS, AND SYSTEM**

(57) A neural network based loop filtering (NNLF) method, a video coding method and apparatus, and a system are provided. In terms of performing NNLF on a reconstructed picture, an encoding end can select an optimal mode from a chroma fusion mode and other modes to perform NNLF and set a corresponding flag, where an NNLF model used in the chroma fusion mode is trained using training data obtained by adjusting chroma information. A decoding end selects, according to the flag, one of the modes to perform NNLF on the reconstructed picture which can improve the coding performance.

```
┌─────────────────────────────────────────┐
│ DECODE FIRST FLAG OF RECONSTRUCTED       │ ─ S510
│ PICTURE, WHERE FIRST FLAG CONTAINS       │
│ INFORMATION OF NNLF MODE TO BE USED      │
│ WHEN PERFORMING NNLF ON                  │
│ RECONSTRUCTED PICTURE                    │
└─────────────────────────────────────────┘
                    │
                    ▼
┌─────────────────────────────────────────┐
│ DETERMINE, ACCORDING TO FIRST FLAG,      │ ─ S520
│ NNLF MODE TO BE USED WHEN PERFORMING     │
│ NNLF ON RECONSTRUCTED PICTURE, AND       │
│ PERFORM NNLF ON RECONSTRUCTED PICTURE    │
│ ACCORDING TO DETERMINED NNLF MODE,       │
│ WHERE SECOND MODE INCLUDES CHROMA        │
│ FUSION MODE                              │
└─────────────────────────────────────────┘
```

FIG. 13

**Description**

TECHNICAL FIELD

Embodiments of the disclosure relate to, but are not limited to, the video technology, in particular to a neural network based loop filtering (NNLF) method, a video coding method and apparatus, and a system.

BACKGROUND

The digital video compression technology is mainly to compress a huge amount of digital image video data, so as to facilitate transmission and storage, etc. A picture of an original video sequence contains a luma component and a chroma component. In digital video coding, an encoder reads a black and white picture or a color picture and partitions each picture into largest coding units (LCUs) of equal size (e.g., 128×128, 64×64, etc.). Each LCU may be partitioned into rectangular coding units (CUs) according to a rule, which may be further partitioned into prediction units (PUs) and transform units (TUs), etc. A hybrid coding framework includes modules for such as prediction, transform, quantization, entropy coding, and in-loop filter. The prediction module may use intra prediction and inter prediction. For the intra prediction, sample information of a current block is predicted based on information of the same picture, thereby eliminating spatial redundancy. The inter prediction can refer to information of different pictures and use motion estimation to search for motion vector information that best matches the current block, so as to eliminate temporal redundancy. For the transform, a predicted residual is transformed into a frequency domain to redistribute energy, and combined with the quantization, information that is not sensitive to human eyes is removed, thereby eliminating visual redundancy. The entropy coding can eliminate character redundancy according to a current context model and probability information of a binary bitstream, to generate a bitstream.

With a sharp increase in Internet videos and an increasingly high requirement on video clarity, although a lot of video data can be saved with existing digital video compression standards, it is still necessary to pursue better digital video compression technologies to reduce pressure on a bandwidth and a traffic of digital video transmission.

SUMMARY

The following is a summary of subject matter described in detail herein. The summary is not intended to limit the scope of protection of the claims.

A neural network based loop filtering (NNLF) method is provided in an embodiment of the disclosure. The method is applied to a video decoding apparatus and includes the following. A first flag of a reconstructed picture is decoded, where the first flag contains information of an NNLF mode to be used when performing NNLF on the reconstructed picture. The NNLF mode to be used when performing NNLF on the reconstructed picture is determined according to the first flag, and NNLF is performed on the reconstructed picture according to the determined NNLF mode. The NNLF mode includes a first mode and a second mode. The second mode includes a chroma fusion mode. Training data for training a model used in the chroma fusion mode includes augmented data obtained after performing specified adjustment on chroma information of the reconstructed picture in original data or includes the original data and the augmented data.

A video decoding method is further provided in an embodiment of the disclosure. The method is applied to a video decoding apparatus and includes the following. When performing NNLF on a reconstructed picture, the following operations are executed. When chroma fusion is enabled for NNLF, NNLF is performed on the reconstructed picture according to the NNLF method of any embodiment of the disclosure, where the NNLF method is applied to a decoding end and can use a chroma fusion mode.

An NNLF method is further provided in an embodiment of the disclosure. The method is applied to a video encoding apparatus and includes the following. A rate-distortion cost for performing NNLF on a reconstructed picture input by using a first mode is calculated, and a rate-distortion cost for performing NNLF on the reconstructed picture by using a second mode is calculated. It is determined to perform NNLF on the reconstructed picture by using a mode with a minimum rate-distortion cost between the first mode and the second mode. The first mode and the second mode each are a set NNLF mode. The second mode includes a chroma fusion mode. Training data for training a model used in the chroma fusion mode includes augmented data obtained after performing specified adjustment on chroma information of the reconstructed picture in original data or includes the original data and the augmented data.

A video encoding method is further provided in an embodiment of the disclosure. The method is applied to a video encoding apparatus and includes the following. When performing NNLF on a reconstructed picture, the following operations are executed. When chroma fusion is enabled for NNLF, NNLF is performed on the reconstructed picture according to the NNLF method of any embodiment of the disclosure, where the NNLF method is applied to an encoding end and can use a chroma fusion mode. A first flag of the reconstructed picture is encoded, where the first flag contains information of an NNLF mode to be used when performing NNLF on the reconstructed picture.

A bitstream is further provided in an embodiment of the disclosure. The bitstream is generated according to the video encoding method of any embodiment of the disclosure.

A neural network based loop filter is further provided in an embodiment of the disclosure. The neural network based loop filter includes a processor and a memory storing a computer program. When executing the computer program, the processor can implement the neural network based loop filtering method of any embodiment of the disclosure.

A video decoding apparatus is further provided in an embodiment of the disclosure. The video decoding apparatus includes a processor and a memory storing a computer program. When executing the computer program, the processor can implement the video decoding method of any embodiment of the disclosure.

A video encoding apparatus is further provided in an embodiment of the disclosure. The video encoding apparatus includes a processor and a memory storing a computer program. When executing the computer program, the processor can implement the video encoding method of any embodiment of the disclosure.

A video coding system is further provided in an embodiment of the disclosure. The video coding system includes the video encoding apparatus of any embodiment of the disclosure and the video decoding apparatus of any embodiment of the disclosure.

A non-transitory computer-readable storage medium is further provided in an embodiment of the disclosure. The computer-readable storage medium stores a computer program. The computer program, when executed by a processor, can implement the neural network based loop filtering method of any embodiment of the disclosure, the video decoding method of any embodiment of the disclosure, or the video encoding method of any embodiment of the disclosure.

After reading and understanding the drawings and detailed description, other aspects can be understood.

BRIEF DESCRIPTION OF THE DRAWINGS

The accompanying drawings are used to provide an understanding of embodiments of the disclosure, and constitute a part of the specification, and together with embodiments of the disclosure, serve to explain technical solutions of the disclosure, and are not limiting to the technical solutions of the disclosure.

FIG. 1A is a schematic diagram of a coding system according to an embodiment.

FIG. 1B is a framework diagram of an encoding end in FIG. 1A.

FIG. 1C is a framework diagram of a decoding end in FIG. 1A.

FIG. 2 is a block diagram of a filter unit according to an embodiment.

FIG. 3A is a structural diagram of a network of a neural network based loop filtering (NNLF) filter according to an embodiment.

FIG. 3B is a structural diagram of a residual block in FIG. 3A.

FIG. 3C is a schematic diagram illustrating an input to and output of the NNLF filter in FIG. 3A.

FIG. 4A is a structural diagram of a backbone of an NNLF filter according to another embodiment.

FIG. 4B is a structural diagram of a residual block in FIG. 4A.

FIG. 4C is a schematic diagram illustrating an input to and output of the NNLF filter in FIG. 4A.

FIG. 5 is a schematic diagram illustrating arrangement of feature maps of input information.

FIG. 6 is a flowchart of an NNLF method applied to an encoding end according to an embodiment of the disclosure.

FIG. 7 is a block diagram of a filter unit according to an embodiment of the disclosure.

FIG. 8 is a flowchart of a video encoding method according to an embodiment of the disclosure.

FIG. 9 is a flowchart of an NNLF method applied to a decoding end according to an embodiment of the disclosure.

FIG. 10 is a flowchart of a video decoding method according to an embodiment of the disclosure.

FIG. 11 is a schematic diagram of a hardware structure of an NNLF filter according to an embodiment of the disclosure.

FIG. 12A is a schematic diagram illustrating an input to and output of an NNLF filter without adjusting orders of chroma information according to an embodiment of the disclosure.

FIG. 12B is a schematic diagram illustrating an input to and output of an NNLF filter without adjusting orders of chroma information according to an embodiment of the disclosure.

FIG. 13 is a flowchart of an NNLF method applied to a decoding end according to an embodiment of the disclosure.

FIG. 14 is a flowchart of a video decoding method according to an embodiment of the disclosure.

FIG. 15 is a flowchart of an NNLF method applied to an encoding end according to an embodiment of the disclosure.

FIG. 16 is a flowchart of a video encoding method according to an embodiment of the disclosure.

FIG. 17 is a flowchart of a training method for an NNLF model according to an embodiment of the disclosure.

DETAILED DESCRIPTION

Multiple embodiments are described in the disclosure, but the description is exemplary rather than limiting, and it will be apparent to those of ordinary skill in the art that more embodiments and implementations may be included within the scope of the embodiments described in the disclosure.

In the description of the disclosure, the words "exemplary" or "for example" are used as examples, illustrations, or explanations. Any embodiment described in the disclosure as "exemplary" or "for example" should not be construed as being more preferred or advantageous than other embodiments. Herein, "and/or" is a description of the association relationship of associated objects, indicating that there can be three relationships, for example, A and/or B, which can mean that there are three situations: only A, both A and B, and only B. "Multiple" means two or more. In addition, to clearly describe the technical solutions of the embodiment of the disclosure, the words "first", "second", and the like are used to distinguish the same items or similar items with substantially the same functions and effects. Those skilled in the art will appreciate that the words "first", "second", and the like are not limited in number or order of execution, and that the words "first", "second", and the like are not limited to any difference.

In describing representative embodiments, the specification may have presented the method and/or process as a particular sequence of steps. However, to the extent that the method or process does not depend on the particular order of the steps described herein the method or process should not be limited to the particular order of steps. As will be understood by those of ordinary skill in the art, other sequences of steps are also possible. Accordingly, the particular sequence of steps set forth in the specification should not be construed as limiting the claims. Furthermore, the claims for the method and/or process should not be limited to the steps of performing them in the written order, which can be readily understood by those skilled in the art and which can vary and remain within the spirit and scope of the embodiments of the disclosure.

A neural network based loop filtering (NNLF) method, a video encoding method, and a video decoding method in embodiments of the disclosure can be applied to various video coding standards, such as H.264 / Advanced Video Coding (AVC), H.265 / High Efficiency Video Coding (HEVC), H.266 / Versatile Video Coding (VVC), Audio Video Coding Standard (AVS), and other standards developed by Moving Picture Experts Group (MPEG), Alliance for Open Media (AOM), Joint Video Experts Team (JVET) and extensions of these standards, or any other customized standards.

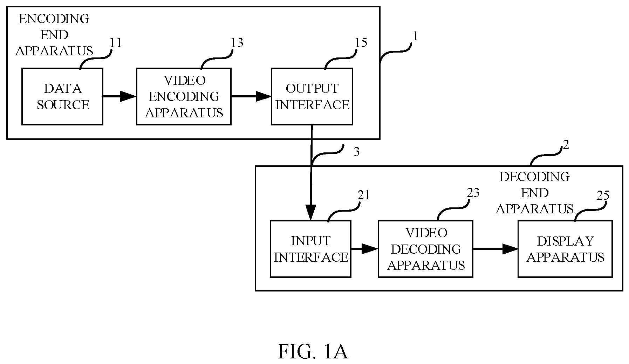

FIG. 1A is a block diagram of a video coding system that can be used in embodiments of the disclosure. As illustrated in the figure, the system is divided into an encoding end 1 and a decoding end 2. The encoding end 1 is configured to generate a bitstream. The decoding end 2 can decode the bitstream. The decoding end 2 can receive the bitstream from the encoding end 1 via a link 3. The link 3 includes one or more media or devices that can transfer the bitstream from the encoding end 1 to the decoding end 2. In one example, the link 3 includes one or more communication media that enable the encoding end 1 to send the bitstream directly to the decoding end 2. The encoding end 1 modulates the bitstream according to a communication standard and sends the modulated bitstream to the decoding end 2. The one or more communication media may include wireless and/or wired communication media, and may form part of a packet network. In another example, the bitstream can also be output from an output interface 15 to a storage device, and the decoding end 2 can read stored data from the storage device via streaming or downloading.

As illustrated in the figure, the encoding end 1 includes a data source 11, a video encoding apparatus 13, and the output interface 15. The data source 11 includes a video capturing apparatus (such as a camera), an archive containing previously captured data, a feed interface for receiving data from a content provider, a computer graphics system for generating data, or a combination of these sources. The video encoding apparatus 13, also called a video encoder, is configured to encode data from the data source 11 and outputs encoded data to the output interface 15. The output interface 15 may include at least one of a regulator, a modem, or a transmitter. The decoding end 2 includes an input interface 21, a video decoding apparatus 23, and a display apparatus 25. The input interface 21 includes at least one of a receiver or a modem. The input interface 21 can receive a bitstream via the link 3 or from the storage device. The video decoding apparatus 23, also called a video decoder, is configured to decode the received bitstream. The display apparatus 25 is configured to display decoded data. The display apparatus 25 can be integrated with other devices of the decoding end 2 or arranged separately. The display apparatus 25 is optional for the decoding end. In other examples, the decoding end may include other devices or equipment for the decoded data.

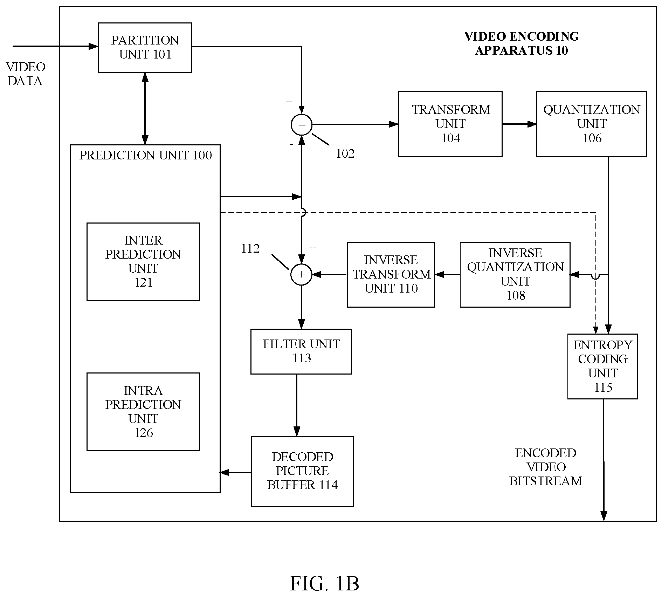

FIG. 1B is a block diagram of an exemplary video encoding apparatus that can be used in embodiments of the disclosure. As illustrated in the figure, the video encoding apparatus 10 includes a partition unit 101, a prediction unit 100, an inter prediction unit 121, an intra prediction unit 126, a residual generation unit 102, a transform unit 104, a quantization unit 106, an inverse quantization unit 108, an inverse transform unit 110, a reconstruction unit 112, a filter unit 113, a decoded picture buffer 114, and an entropy coding unit 115.

The partition unit 101 is configured to cooperate with the prediction unit 1100 to partition received video data into slices, coding tree units (CTUs), or other relatively large units. The received video data may be a video sequence including video pictures such as I-pictures, P-pictures, or B-pictures.

The prediction unit 100 is configured to partition the CTU into coding units (CUs), and perform intra prediction coding or inter prediction coding on the CU. For performing intra prediction and inter prediction on the CU, the CU can be partitioned into one or more prediction units (PUs).

The prediction unit 100 includes an inter prediction unit 121 and an intra prediction unit 126.

The inter prediction unit 121 is configured to perform inter prediction on the PU and generate prediction data for the PU. The prediction data includes a prediction block for the PU, motion information for the PU, and various syntax elements for the PU. The inter prediction unit 121 may include a motion estimation (ME) unit and a motion compensation (MC) unit. The motion estimation unit can be configured for motion estimation to generate a motion vector. The motion compensation unit can be configured to obtain or generate a prediction block according to the motion vector.

The intra prediction unit 126 is configured to perform intra prediction on the PU and generate prediction data for the PU. The prediction data for the PU may include a prediction block and various syntax elements for the PU.

The residual generation unit 102 (indicated by a circle with a plus sign after the partition unit 101 in the figure) is configured to generate a residual block for the CU by subtracting, from the original block for the CU, the prediction blocks for the PUs into which the CU is partitioned.

The transform unit 104 is configured to partition the CU into one or more transform units (TUs), and the partition for the prediction unit and the partition for the transform unit may be different. A residual block associated with the TU is a sub-block obtained by partitioning the residual block of the CU. A coefficient block associated with the TU is generated by applying one or more transforms to the residual block associated with the TU.

The quantization unit 1106 is configured to quantize a coefficient(s) in a coefficient block based on a quantizer parameter(s) (QP(s)). The quantization degree of the coefficient block can be changed by adjusting the QP(s).

The inverse quantization unit 108 and the inverse transform unit 110 are configured to apply inverse quantization and inverse transform to the coefficient block, respectively, to obtain a reconstructed residual block associated with the TU.

The reconstruction unit 112 (indicated by a circle with a plus sign after the inverse transform unit 110 in the figure) is configured to add the reconstructed residual block and the prediction block generated by the prediction unit 100 to generate a reconstructed picture.

The filter unit 113 is configured to perform loop filtering on the reconstructed picture.

The decoded picture buffer 114 is configured to store the loop-filtered reconstructed picture. The intra prediction unit 126 can extract a reference picture for a neighbouring block for a current block from the decoded picture buffer 114 to perform intra prediction. The inter prediction unit 121 can use a previous reference picture buffered in the decoded picture buffer 114 to perform inter prediction on the PU of the current picture.

The entropy coding unit 115 is configured to perform entropy coding on received data (e.g., syntax elements, quantized coefficient blocks, motion information, etc.), so as to generate a video bitstream.

In other examples, the video encoding apparatus 10 may include more, fewer, or different functional components than this example, for example, the transform unit 104, the inverse transform unit 110, etc. may be omitted.

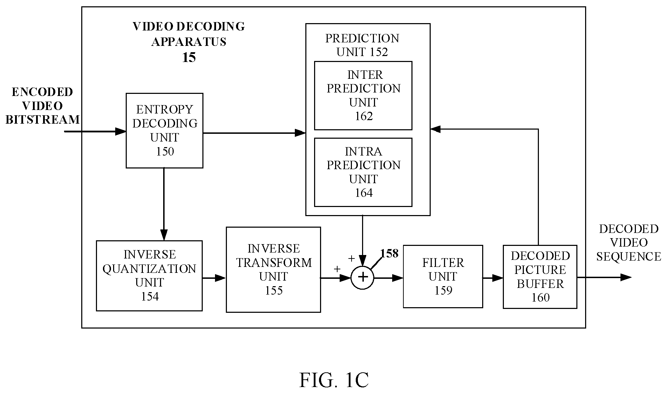

FIG. 1C is a block diagram of an exemplary video decoding apparatus that can be used in embodiments of the disclosure. As illustrated in the figure, the video decoding apparatus 15 includes an entropy decoding unit 150, a prediction unit 152, an inverse quantization unit 154, an inverse transform unit 156, a reconstruction unit 158, a filter unit 159, and a decoded picture buffer 160.

The entropy decoding unit 150 is configured to perform entropy decoding on a received encoded video bitstream, and extract syntax elements, quantized coefficient blocks, motion information for the PU, etc. The prediction unit 152, the inverse quantization unit 154, the inverse transform unit 156, the reconstruction unit 158, and the filter unit 159 can all perform corresponding operations based on the syntax elements extracted from the bitstream.

The inverse quantization unit 154 is configured to perform inverse quantization on a coefficient block associated with a quantized TU.

The inverse transform unit 156 is configured to apply one or more inverse transforms to an inverse quantized coefficient block to generate a reconstructed residual block for the TU.

The prediction unit 152 includes an inter prediction unit 162 and an intra prediction unit 164. If a current block is encoded using intra prediction, the intra prediction unit 164 can determine an intra prediction mode for the PU based on syntax elements decoded from the bitstream, and perform intra prediction according to reconstructed reference information adjacent to the current block obtained from the decoded picture buffer 160. If the current block is encoded using inter prediction, the inter prediction unit 162 can determine a reference block for the current block based on motion information for the current block and corresponding syntax elements for the current block, and perform inter prediction based on the reference block obtained from the decoded picture buffer 160.

The reconstruction unit 158 (indicated by a circle with a plus sign after the inverse transform unit 155 in the figure) is configured to obtain a reconstructed picture based on the reconstructed residual block associated with the TU and a prediction block for the current block generated by the prediction unit 152 through intra prediction or inter prediction.

The filter unit 159 is configured to perform loop filtering on the reconstructed picture.

The decoded picture buffer 160 is configured to store the loop-filtered reconstructed picture which is used as a reference picture for subsequent motion compensation, intra prediction, inter prediction, etc., and can also output the filtered reconstructed picture as decoded video data for presentation on the display apparatus.

In other embodiments, the video decoding apparatus 15 may include more, fewer or different functional components, for example, the inverse transform unit 155 may be omitted in some cases.

Based on the above-mentioned video encoding apparatus and video decoding apparatus, the following basic encoding and decoding processes can be performed. At the encoding end, a picture is partitioned into blocks, intra prediction or inter prediction or other algorithms are performed on the current block to generate a prediction block for the current block, the prediction block is subtracted from the original block for the current block to obtain a residual block, the residual block is transformed and quantized to obtain a quantization coefficient, and entropy coding is performed on the quantization coefficient to generate a bitstream. At the decoding end, intra prediction or inter prediction is performed on the current block to generate a prediction block for the current block, and on the other hand, the quantization coefficient obtained by decoding the bitstream is inversely quantized and inversely transformed to obtain the residual block, the prediction block and the residual block are added to obtain a reconstructed block, the reconstructed block constitutes a reconstructed picture, and loop filtering is performed on the reconstructed picture based on the picture or block to obtain a decoded picture. Through operations similar to those of the decoding end, the encoding end also obtains a decoded picture, which may also be referred to as a loop-filtered reconstructed picture. The loop-filtered reconstructed picture can be used as a reference picture for inter prediction for subsequent pictures. Information determined by the encoding end, such as block partition information, mode information and parameter information such as prediction, transform, quantization, entropy coding, in-loop filter, etc. can be signalled into the bitstream. By decoding the bitstream or analyzing set information, the decoding end determines the block partition information, the mode information and parameter information such as prediction, transform, quantization, entropy coding, in-loop filter, etc. used by the encoding end, thereby ensuring that the decoded picture obtained by the encoding end is the same as the decoded picture obtained by the decoding end.

Although the above is an example of a block-based hybrid coding framework, embodiments of the disclosure are not limited thereto. With the development of technology, one or more modules in the framework and one or more steps in the process may be replaced or optimized.

Embodiments of the disclosure relate to, but are not limited to, the above filter units (the filter units may also be referred to as loop filtering modules) in the encoding end and decoding end and corresponding loop filtering methods.

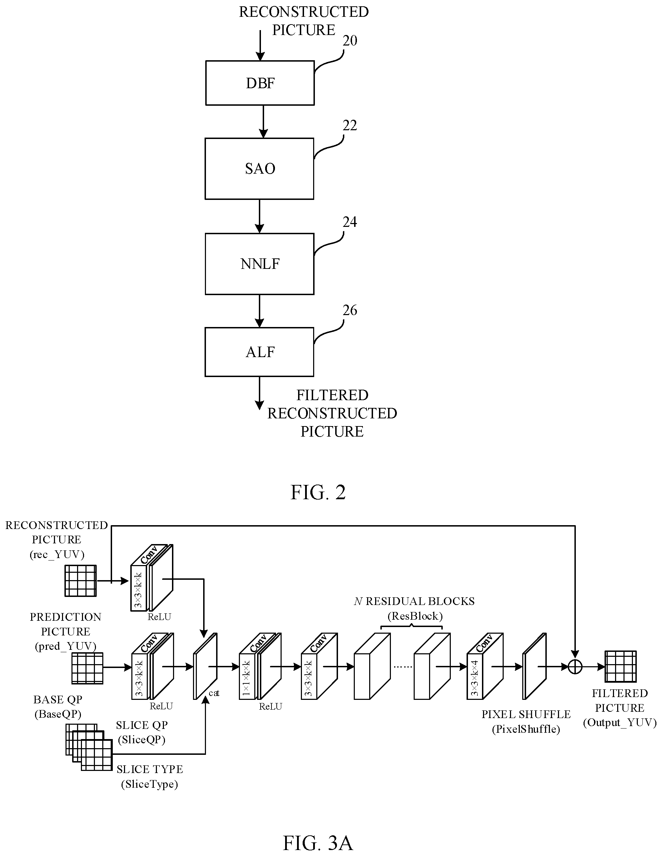

In an embodiment, the filter units in the encoding end and decoding end each include tools such as a deblocking filter (DBF) 20, a sample adaptive offset (SAO) 22, and an adaptive loop filter (ALF) 26, and further include a neural network based loop filter 26 between the SAO and the ALF, as illustrated in FIG. 2. The filter unit performs loop filtering on the reconstructed picture, which can compensate for distortion information and provide a better reference for subsequent sample encoding.

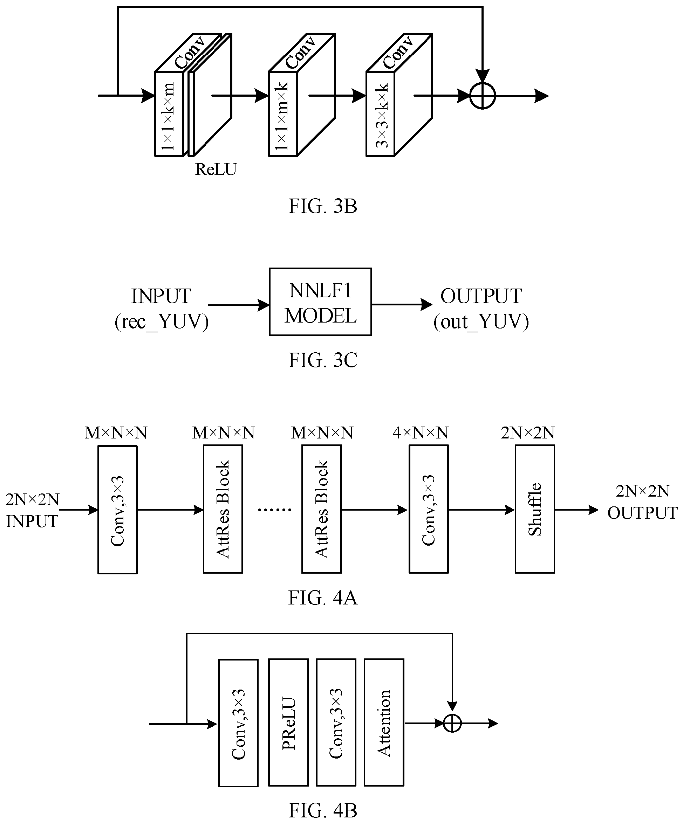

In an exemplary embodiment, an NNLF solution is provided, and a model used (also referred to as a network model) uses a filtering network as illustrated in FIG. 3A. Herein, this NNLF is referred to as NNLF1, and a filter for performing NNLF1 is referred to as an NNLF 1 filter. As illustrated in the figure, a backbone of the filtering network includes multiple residual blocks (ResBlock) connected in sequence, and further includes a convolutional layer (indicated by Conv in the figure), an activation function layer (ReLU in the figure), a concat layer (indicated by Cat in the figure), and a pixel shuffle layer (indicated by Pixel Shuffle in the figure). A structure of each residual block is illustrated in FIG. 3B, which includes a convolutional layer with a convolutional-kernel size of $1\times1$, an ReLU layer, a convolutional layer with a convolutional-kernel size of $1\times1$, and a convolutional layer with a convolutional-kernel size of $3\times3$ that are connected in sequence.

As illustrated in FIG. 3A, an input to the NNLF1 filter includes luma information (i.e., a Y component) and chroma information (i.e., a U component and a V component) of a reconstructed picture (rec_YUV) and multiple auxiliary information, such as luma information and chroma information of a prediction picture (pred_YUV), QP information, and picture-type information. The QP information includes a base quantization parameter (BaseQP) default in an encoding profile and a slice quantization parameter (SliceQP) of a current slice, and the picture-type information includes a slice type (SliceType), i.e., a type of a picture to which the current slice belongs. An output of the model is a filtered picture (output_YUV) that is subjected to the NNLF1 filter, and the filtered picture output by the NNLF1 filter can also be used as a reconstructed picture input to a subsequent filter.

In NNLF1, one model is used to filter YUV components of the reconstructed picture (rec_YUV) and output YUV components of the filtered picture (out_YUV), as illustrated in FIG. 3C, where auxiliary input information such as YUV components of the prediction picture is omitted in the figure. A filtering network of this model has a skip-connection branch between the input reconstructed picture and the output filtered picture, as illustrated in FIG. 3A.

In another exemplary embodiment, another NNLF solution is provided, which is referred to as NNLF2. In NNLF2, two models need to be trained separately. One model is used to filter a luma component of a reconstructed picture, and the other model is used to filter two chroma components of the reconstructed picture. These two models can use the same filtering network, which also has a skip-connection branch between a reconstructed picture input to an NNLF2 filter and a filtered picture output by the NNLF2 filter. As illustrated in FIG. 4A, a backbone of the filtering network includes multiple residual blocks with attention mechanisms (AttRes Block) connected in sequence, and a convolutional layer (Conv $3\times3$) for feature mapping, and a shuffle layer (Shuffle). A structure of each of the residual blocks with attention mechanisms is illustrated in FIG. 4B, which includes a convolutional layer (Conv $3\times3$), an activation layer (PReLU), a convolutional layer (Conv $3\times3$), and an attention layer (Attention) that are connected in sequence, where $M$ represents the number of feature maps, and $N$ represents the number of samples in one dimension.

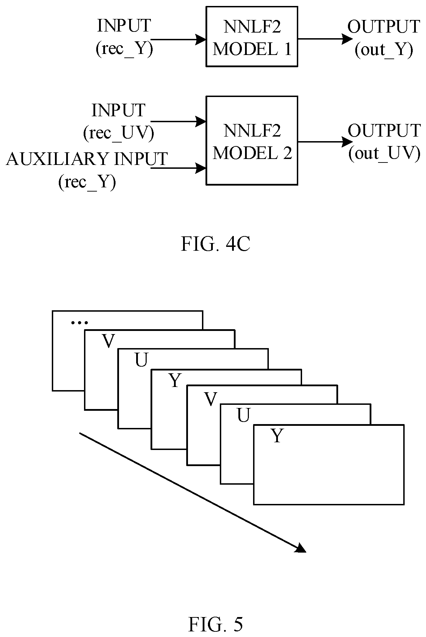

In NNLF2, model 1 for filtering the luma component of the reconstructed picture is illustrated in FIG. 4C, input information of model 1 includes the luma component of the reconstructed picture (rec_Y), and an output of model 1 is a luma component of the filtered picture (out_Y), where auxiliary input information such as a luma component of a prediction picture is omitted in the figure. In NNLF2, model 2 for filtering the two chroma components of the reconstructed picture is illustrated in FIG. 4C, input information of model 2 includes the two chroma components of the reconstructed picture (rec_UV) and the luma component of the reconstructed picture (rec_Y) serving as the auxiliary input information, and an output of model 2 is two chroma components of the filtered picture (out_UV). Model 1 and model 2 may further contain other auxiliary input information such as QP information, block partition pictures, deblocking filtering boundary-strength information, etc.

The above NNLF1 solution and NNLF2 solution can be implemented by neural network based common software (NCS) in neural network based video coding (NNVC), and each serve as a baseline tool in the NNVC reference software test platform, i.e., a baseline NNLF.

In video coding, reference to picture information of a previous picture is allowed for a current picture in an inter prediction technology, thereby improving the coding performance, and coding effects of the previous picture may also affect coding effects of a subsequent picture. In NNLF1 and NNLF2 solutions, to adapt a filtering network to the influence of the inter prediction technology, the model training process thereof includes an initial training stage and an iterative training stage, and a multi-round training mode is used. In the initial training stage, a model to-be-trained has not yet been deployed in an encoder, and a first-round trained model is obtained by performing first-round training on the model based on collected sample data of the reconstructed picture. In the iterative training stage, each model is deployed in the encoder. Specifically, first, the first-round trained model is deployed in the encoder, and a second-round trained model is obtained through re-collecting of sample data of the reconstructed picture and second-round training of the first-round trained model. Then, the second-round trained model is deployed in the encoder, and a third-round trained model is obtained through re-collecting of sample data of the reconstructed picture and third-round training of the second-round trained model, and such iterative training is repeated. Finally, for a model obtained after each round of training, coding testing is performed on a validation set, so as to find a model with the best coding performance for actual deployment.

As above mentioned, in NNLF1' and NNLF2, for the luma component and chroma component of the reconstructed picture that are input to a neural network, a joint-input mode is used in NNLF1, and as illustrated in FIG. 3C, only one network model needs to be trained; and the luma component and chroma component of the reconstructed picture are separately input in NNLF2, and as illustrated in FIG. 4C, two models need to be trained. For two chroma components, i.e., the U component and V component, both NNLF1' and NNLF2 use the joint-input mode, which means that there is a binding relationship. As illustrated in FIG. 5, during inputting stacked feature maps to a model for prediction and output, three components of each picture are arranged in the order of Y, U, and V, with the U component at the front and the V component at the back. Currently, there is a lack of solutions to study the influence of adjusting input orders of the U component and V component on the neural network.

A method for adjusting chroma information is proposed in an embodiment of the disclosure. By adjusting chroma information input to an NNLF filter, for example, swapping orders of the U component and V component, the coding performance of the NNLF filter can be further optimized.

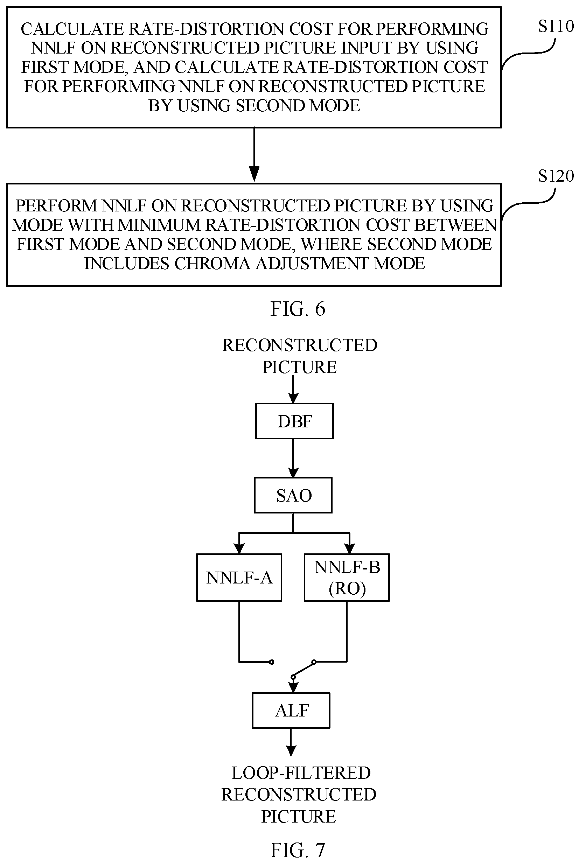

An NNLF method is provided in an embodiment of the disclosure. The method is applied to a video encoding apparatus. As illustrated in FIG. 6, the method includes the following.

At S110, a rate-distortion cost for performing NNLF on a reconstructed picture input by using a first mode is calculated, and a rate-distortion cost for performing NNLF on the reconstructed picture by using a second mode is calculated.

At S120, it is determined to perform NNLF on the reconstructed picture by using a mode with a minimum rate-distortion cost between the first mode and the second mode.

The first mode and the second mode each are a set NNLF mode. The second mode includes a chroma adjustment mode. Compared with the first mode, specified adjustment of input chroma information before filtering is added in the chroma adjustment mode.

Tests have shown that adjustment of the input chroma information can affect the coding performance. In this embodiment, an optimal mode can be selected according to a rate-distortion cost from the second mode in which the chroma information is adjusted and the first mode in which the chroma information is not adjusted, thereby improving the coding performance.

In an exemplary embodiment of the disclosure, specified adjustment is performed on the chroma information in any one or more of the following adjustment manners. Orders of two chroma components of the reconstructed picture are swapped, for example, a sort order in which the U component is at the front and the V component is at the back is adjusted to a sort order in which the V component is at the front and the U component is at the back. A weighted average value and a square error value of the two chroma components of the reconstructed picture are calculated, and the weighted average value and the square error value are determined as chroma information to be input in the NNLF mode.

In an exemplary embodiment of the disclosure, the reconstructed picture is a reconstructed picture of a current picture or a current slice or a current block, but may also be a reconstructed picture of another coding unit. Herein, a reconstructed picture using an NNLF filter may belong to coding units of different levels such as a picture-level (including a picture and a slice), a block-level, and the like.

In an exemplary embodiment of the disclosure, a network structure of a model used in the first mode is the same as or different from a network structure of a model used in the second mode.

In an exemplary embodiment of the disclosure, the second mode further includes a chroma fusion mode. Training data for training a model used in the chroma fusion mode includes augmented data obtained after performing specified adjustment on chroma information of the reconstructed picture in original data or includes the original data and the augmented data. A network model used in the first mode is trained using the original data.

In an exemplary embodiment of the disclosure, the second mode further includes a chroma adjustment and fusion mode. Compared with the first mode, specified adjustment of input chroma information before filtering is added in the chroma adjustment and fusion mode, and training data for training a model used in the chroma fusion mode includes augmented data obtained after performing specified adjustment on chroma information of the reconstructed picture in original data or includes the original data and the augmented data. A network model used in the first mode is trained using the original data.

In an exemplary embodiment of the disclosure, the first mode includes (or is implemented as) one first mode, and the second mode includes (or is implemented as) one or more second modes. The rate-distortion cost $cost_1$ for performing NNLF on the reconstructed picture input by using the first mode is calculated as follows. A first filtered picture output after performing NNLF on the reconstructed picture by using the first mode is obtained, and $cost_1$ is calculated according to a difference between the first filtered picture and a corresponding original picture. The rate-distortion cost $cost_2$ for performing NNLF on the reconstructed picture by using the second mode is calculated as follows. For each of the one or more second modes, a second filtered picture output after performing NNLF on the reconstructed picture by using the second mode is obtained, and $cost_2$ of the second mode is calculated according to a difference between the second filtered picture and the corresponding original picture.

In an example of this embodiment, the second mode includes multiple second modes. A mode with a minimum rate-distortion cost between the first mode and the second mode is a mode corresponding to a minimum value among $cost_1$ and multiple $cost_2$ calculated.

In an example of this embodiment, the difference is represented by a sum of squared differences (SSD). In other examples, the difference may also be represented by a mean squared error (MSE), a mean absolute error (MAE), or another indicator, which is not limited in the disclosure. The same applies to other embodiments of the disclosure.

In an exemplary embodiment of the disclosure, the method further includes the following. A filtered picture obtained by performing NNLF on the reconstructed picture by using the mode with the minimum rate-distortion cost is determined as a filtered picture output after performing NNLF on the reconstructed picture.

In an exemplary embodiment of the disclosure, an NNLF filter for performing NNLF at an encoding end and/or a decoding end is arranged after a deblocking filter or a sample adaptive offset and before an adaptive loop filter. In an example of this embodiment, a structure of a filter unit (or referred to as a loop filtering module, as illustrated in FIG. 1B and FIG. 1C) is illustrated in FIG. 7, where the DBF represents the deblocking filter, the SAO represents the sample adaptive offset, and the ALF represents the adaptive loop filter. NNLF-A represents an NNLF filter using the first mode, and NNLF-B represents an NNLF filter using the second mode such as the chroma adjustment mode, which may also be referred to as a chroma adjustment (CA) module. The NNLF-A filter may be the same as an NNLF filter without chroma adjustment (or called chroma information adjustment), such as the NNLF1 filter and NNLF2 filter.

Although the NNLF-A filter and NNLF-B filter are illustrated in FIG. 7, a model can be used in actual implementation, where the NNLF-B filter can be regarded as the NNLF-A filter with chroma adjustment added. Based on the model, loop filtering is performed once by using the model (i.e., NNLF is performed on the reconstructed picture by using the first mode, or in other words, NNLF is performed on the reconstructed picture by using the NNLF-A filter) without adjusting the input chroma information (e.g., swapping UV orders), and the rate-distortion cost $cost_1$ is calculated according to the difference, such as an SSD between the first filtered picture output and the original picture. In the case of adjusting the input chroma information, loop filtering is performed once by using the model (i.e., NNLF is performed on the reconstructed picture by using the second mode, or in other words, NNLF is performed on the reconstructed picture by using the NNLF-B filter), and the rate-distortion cost $cost_2$ is calculated according to the difference between the second filtered picture output and the original picture, so that an NNLF mode to be used can be determined according to the magnitude of $cost_1$ and $cost_2$. Information of the NNLF mode to be used (i.e., the selected NNLF mode) is indicated by a first flag and is signalled into a bitstream for a decoder to read. At the decoding end, the first flag is decoded to determine the NNLF mode actually used by the encoding end, and NNLF is performed on the input reconstructed picture by using the determined NNLF mode.

For example, if $cost_1 < cost_2$, NNLF is performed on the reconstructed picture by using the first mode. If $cost_2 < cost_1$, NNLF is performed on the reconstructed picture by using the second mode. If $cost_1 = cost_2$, NNLF is performed on the reconstructed picture by using the first mode or the second mode.

During loop filtering, part or all of the DBF, SAO, or ALF may not be enabled. In addition, a deployment position of the NNLF filter is not limited to the position illustrated in the figure. It can be easily understood that, the implementation of the NNLF method in the disclosure is not limited to the deployment position. Furthermore, filters in the filter unit are not limited to the filters illustrated in FIG. 7, more or fewer filters can be used, or other types of filters can be used.

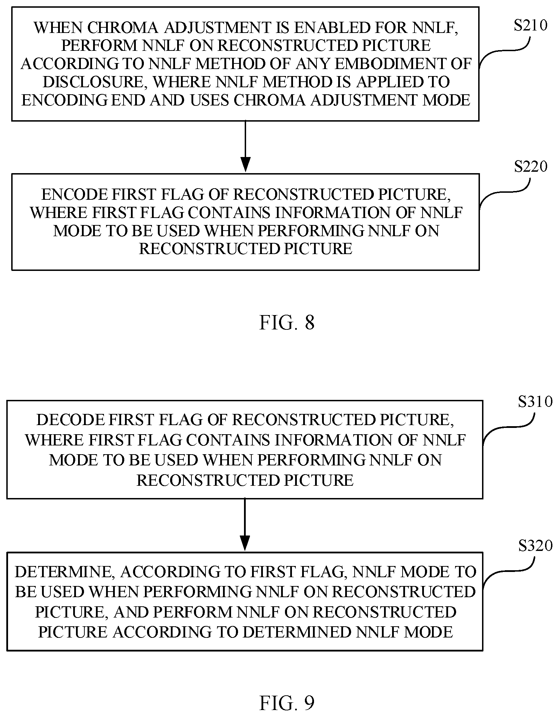

A video encoding method is further provided in an embodiment of the disclosure. The method is applied to a video encoding apparatus and includes the following. When performing NNLF on a reconstructed picture, as illustrated in FIG. 8, the following operations are executed.

At S210, when chroma adjustment is enabled for NNLF, NNLF is performed on the reconstructed picture according to the NNLF method of any embodiment of the disclosure, where the NNLF method is applied to an encoding end and uses a chroma adjustment mode.

At S220, a first flag of the reconstructed picture is encoded, where the first flag contains information of an NNLF mode to be used when performing NNLF on the reconstructed picture.

The first mode and the second mode each are a set NNLF mode. The second mode includes a chroma adjustment mode. Compared with the first mode, specified adjustment of input chroma information before filtering is added in the chroma adjustment mode.

In this embodiment, an optimal mode can be selected according to a rate-distortion cost from the second mode in which the chroma information is adjusted and the first mode in which the chroma information is not adjusted, and the selected mode is signalled into a bitstream, thereby improving the coding performance.

In an exemplary embodiment of the disclosure, the first flag is a picture-level syntax element or a block-level syntax element.

In an exemplary embodiment of the disclosure, when one or more of the following conditions are satisfied, it is determined that chroma adjustment is enabled for NNLF. A sequence-level chroma adjustment enable-flag is decoded, and it is determined according to the sequence-level chroma adjustment enable-flag that chroma adjustment is enabled for NNLF. A picture-level chroma adjustment enable-flag is decoded, and it is determined according to the picture-level chroma adjustment enable-flag that chroma adjustment is enabled for NNLF.

In an exemplary embodiment of the disclosure, the method further includes the following. When it is determined that chroma adjustment is not enabled for NNLF, NNLF is performed on the reconstructed picture by using the first mode, and encoding of a chroma adjustment enable-flag is skipped.

In an exemplary embodiment of the disclosure, the second mode is the chroma adjustment mode, and the first flag indicates whether chroma adjustment is to be performed when performing NNLF on the reconstructed picture. The first flag of the reconstructed picture is encoded as follows. When it is determined to perform NNLF on the reconstructed picture by using the first mode, the first flag is set to a value indicating that chroma adjustment is not to be performed. When it is determined to perform NNLF on the reconstructed picture by using the second mode, the first flag is set to a value indicating that chroma adjustment is to be performed.

In an exemplary embodiment of the disclosure, the second mode includes (or is implemented as) multiple second modes, and the first flag indicates whether the second mode is to be used when performing NNLF on the reconstructed picture. The first flag of the reconstructed picture is encoded as follows. When it is determined to perform NNLF on the reconstructed picture by using the first mode, the first flag is set to a value indicating that the second mode is not to be used. When it is determined to perform NNLF on the reconstructed picture by using the second mode, the first flag is set to a value indicating that the second mode is to be used, and a second flag is further encoded, where the second flag contains index information of one second mode with a minimum rate-distortion cost among the multiple second modes.

A video encoding method applied to an encoding end is provided in an embodiment of the disclosure, which mainly involves NNLF. In this embodiment, the second mode is a chroma adjustment mode.

During loop filtering of a reconstructed picture, if a filter unit includes multiple filters, then the reconstructed picture is processed in a specified order of the filters. When data such as the reconstructed picture (which may be a filtered picture output by another filter) input to an NNLF filter is obtained, the following operations are executed.

Step a), whether chroma adjustment is enabled for NNLF in a current sequence is determined according to a sequence-level chroma adjustment enable-flag ca_enable_flag. If ca_enable_flag is "1", then attempt to perform chroma adjustment on the current sequence, and proceed to step b). If ca_enable_flag is "0", then chroma adjustment is not enabled for NNLF in the current sequence, and in this case, NNLF is performed on the reconstructed picture by using the first mode, encoding of a first flag is skipped, and the process ends.

Step b), for a reconstructed picture of a current picture of the current sequence, NNLF is first performed by using the first mode, that is, original input information is input to an NNLF model for filtering, and a first filtered picture is obtained from an output of the model.

Step c), then, NNLF is performed by using the second mode (the chroma adjustment mode in this embodiment), that is, orders of a U component and a V component of a reconstructed picture input are swapped, then the reconstructed picture is input to the NNLF model for filtering, and a second filtered picture is obtained from an output of the model.

Step d), a rate-distortion cost $C_{NNLF}$ is calculated according to a difference between the first filtered picture and an original picture, and a rate-distortion cost $C_{CA}$ is calculated according to a difference between the second filtered picture and the original picture. The two rate-distortion costs are compared. If $C_{CA} < C_{NNLF}$, it is determined to perform NNLF on the reconstructed picture by using the second mode, and the second filtered picture is determined as a filtered picture which is finally output after performing NNLF on the reconstructed picture. If $C_{CA} \geq C_{NNLF}$, it is determined to perform NNLF on the reconstructed picture by using the first mode, and the first filtered picture is determined as a filtered picture which is finally output after performing NNLF on the reconstructed picture.

A formula for calculating a rate-distortion cost in this embodiment is as follows.

$$\text{cost} = \text{Wy} * \text{SSD(Y)} + \text{Wu} * \text{SSD(U)} + \text{Wv} * \text{SSD(V)}$$

In the above, SSD(*) indicates to calculate an SSD for a certain color component. Wy, Wu, and Wv indicate weights of SSDs for the Y component, U component, and V component respectively, for example, 10:1:1 or 8:1:1.

A formula for calculating an SSD is as follows.

$$\text{SSD} = \sum_{x=0}^{M} \sum_{y=0}^{N} |rec(x,y) - org(x,y)|^2$$

*M* indicates a length of the reconstructed picture of the current picture, *N* indicates a width of the reconstructed picture of the current picture, *rec(x, y)* indicates a pixel value of the reconstructed picture at a pixel *(x, y)*, and *org(x, y)* indicates a pixel value of the original picture at the pixel *(x, y)*.

Step e), the first flag is encoded according to a mode (i.e., a selected mode) used for the current picture, so as to indicate whether to perform chroma adjustment. In this case, the first flag may also be referred to as a chroma adjustment enable-flag picture_ca_enable_flag, which indicates that chroma adjustment needs to be performed when performing NNLF on the reconstructed picture.

If the current picture has been processed, a reconstructed picture of a next picture is loaded and processed in the same way.

In this embodiment, NNLF is performed in a unit of the reconstructed picture of the current picture. In other embodiments, NNLF may also be performed based on other coding units such as a block (for example, a CTU) and a slice in the current picture.

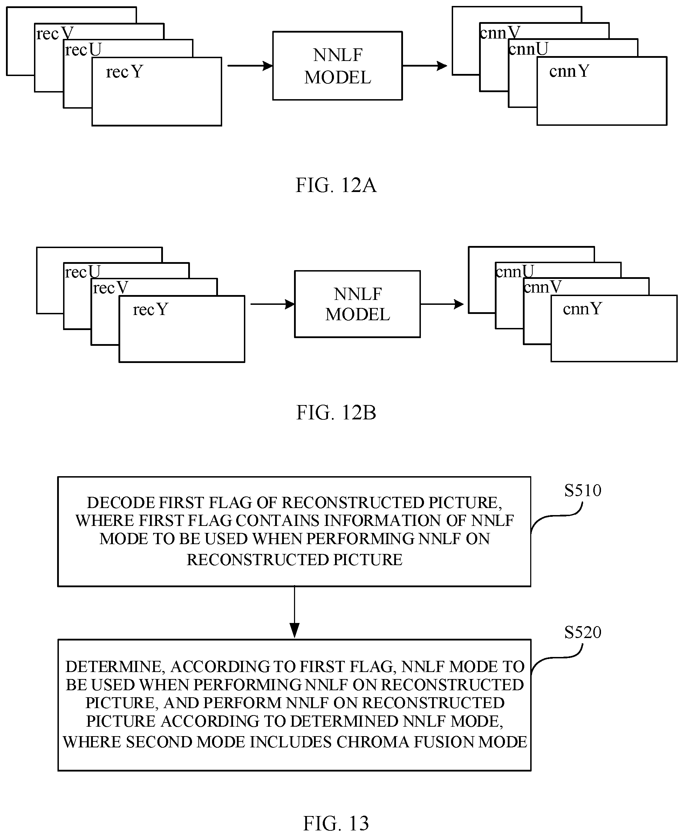

As illustrated in FIG. 12A, for a certain NNLF filter, when the first mode is used, input information of the filter may be arranged in the order of {recY, recU, recV, predY, predU, predV, baseQP, sliceQP, slicetype, ... }, and output information of the filter may be arranged in the order of {cnnY, cnnU, cnnV}, where rec indicates the reconstructed picture, pred indicates a prediction picture, and cnn indicates an output filtered picture.

When the second mode in which the chroma information is adjusted is used, the arrangement order of the input information of the filter is adjusted to {recY, recV, recU, predY, predV, predU, baseQP, sliceQP, slicetype, ... }, and the arrangement order of information of an output network of the filter is adjusted to {cnnY, cnnV, cnnU}, as illustrated in FIG. 12B.

This embodiment explores the generalization of inputs of NNLF by adjusting input orders of the U component and V component in the chroma information, which can further improve the filtering performance of a neural network. In addition, only a flag with few bits needs to be encoded as a control switch, which basically has no influence on the decoding complexity.

In this embodiment, for three components YUV in a picture, a joint rate-distortion cost is used to make a determination. In other embodiments, a more refined operation may also be executed, where rate-distortion costs for each component in different modes are calculated respectively, and a mode with a minimum rate-distortion cost is selected.

An NNLF method is further provided in an embodiment of the disclosure. The method is applied to a video decoding apparatus. As illustrated in FIG. 9, the method includes the following.

At S310, a first flag of a reconstructed picture is decoded, where the first flag contains information of an NNLF mode to be used when performing NNLF on the reconstructed picture.

At S320, the NNLF mode to be used when performing NNLF on the reconstructed picture is determined according to the first flag, and NNLF is performed on the reconstructed picture according to the determined NNLF mode.

The NNLF mode includes a first mode and a second mode. The second mode includes a chroma adjustment mode. Compared with the first mode, specified adjustment of input chroma information before filtering is added in the chroma adjustment mode.

In the NNLF method of this embodiment, a better mode is selected according to the first flag from a mode in which the chroma information is adjusted and a mode in which the chroma information is not adjusted, which can enhance the filtering effect of NNLF and improve the quality of a decoded picture.

In an exemplary embodiment of the disclosure, specified adjustment is performed on the chroma information in any one or more of the following adjustment manners. Orders of two chroma components of the reconstructed picture are swapped. A weighted average value and a square error value of the two chroma components of the reconstructed picture are calculated, and the weighted average value and the square error value are determined as chroma information to be input in the NNLF mode.

In an exemplary embodiment of the disclosure, the reconstructed picture is a reconstructed picture of a current picture or a current slice or a current block.

In an exemplary embodiment of the disclosure, the first flag is a picture-level syntax element or a block-level syntax element.

In an exemplary embodiment of the disclosure, the second mode further includes a chroma fusion mode. Training data for training a model used in the chroma fusion mode includes augmented data obtained after performing specified adjustment on chroma information of the reconstructed picture in original data or includes the original data and the augmented data. A model used in the first mode is trained using the original data.

In an exemplary embodiment of the disclosure, the second mode further includes a chroma adjustment and fusion mode. Compared with the first mode, specified adjustment of input chroma information before filtering is added in the chroma adjustment and fusion mode, and training data for training a model used in the chroma fusion mode includes augmented data obtained after performing specified adjustment on chroma information of the reconstructed picture in original data or includes the original data and the augmented data. A model used in the first mode is trained using the original data.

In an exemplary embodiment of the disclosure, the first mode includes one first mode, and the second mode includes one or more second modes. A network structure of a model used in the first mode is the same as or different from a network structure of a model used in the second mode.

In an exemplary embodiment of the disclosure, the second mode is the chroma adjustment mode, and the first flag indicates whether chroma adjustment is to be performed when performing NNLF on the reconstructed picture. The NNLF mode to be used when performing NNLF on the reconstructed picture is determined according to the first flag as follows. When the first flag indicates that chroma adjustment is to be performed, it is determined that the second mode is to be used when performing NNLF on the reconstructed picture. When the first flag indicates that chroma adjustment is not to be performed, it is determined that the first mode is to be used when performing NNLF on the reconstructed picture.

In an example of this embodiment, a picture header is defined as follows.

| picture_header( ) { | **Descriptor** |
|---|---|
| ... ... | ... ... |
| if(ca_enable_flag) { | |
| picture_ca_enable_flag | u(1) |
| } | |
| | |
| ... ... | ... ... |

In the table, cf_enable_flag is a sequence-level chroma adjustment enable-flag. When ca_enable_flag is 1, the following semantics may be defined: picture_ca_enable_flag, indicating a picture-level chroma adjustment enable-flag, i.e., the above first flag. When picture_ca_enable_flag is 1, it indicates that chroma adjustment is to be performed when performing NNLF on the reconstructed picture, that is, the second mode (the chroma adjustment mode in this embodiment) is to be used. When picture_ca_enable_flag is 0, it indicates that chroma adjustment is not to be performed when performing NNLF on the reconstructed picture, that is, the first mode is to be used. When ca_enable_flag is 0, decoding and encoding of picture_ca_enable_flag are skipped.

In an exemplary embodiment of the disclosure, the second mode includes multiple second modes, and the first flag indicates whether the second mode is to be used when performing NNLF on the reconstructed picture. The NNLF mode to be used when performing NNLF on the reconstructed picture is determined according to the first flag as follows. When the first flag indicates that the second mode is not to be used, it is determined that the first mode is to be used when performing NNLF on the reconstructed picture. When the first flag indicates that the second mode is to be used, a second flag is further decoded, where the second flag contains index information of one second mode to be used among the multiple second modes. It is determined according to the second flag that the one second mode among the multiple second modes is to be used when performing NNLF on the reconstructed picture.

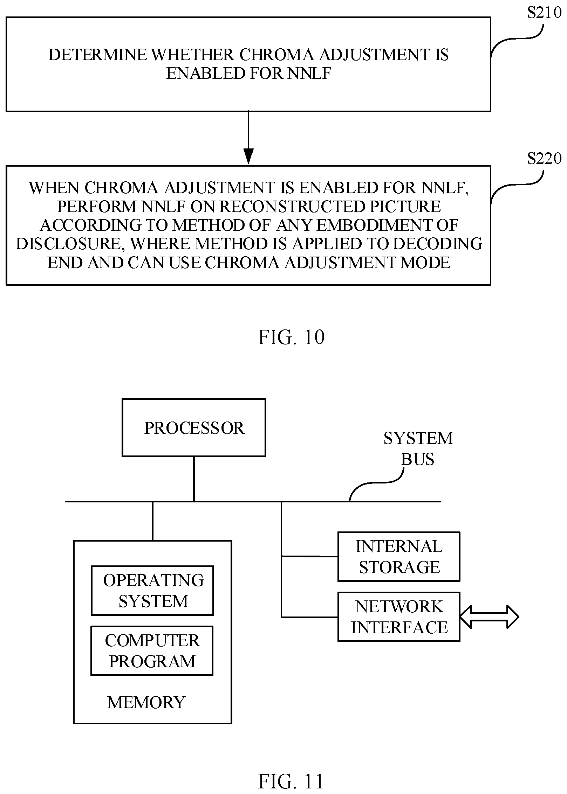

A video decoding method is further provided in an embodiment of the disclosure. The method is applied to a video decoding apparatus and includes the following. When performing NNLF on a reconstructed picture, as illustrated in FIG. 10, the following operations are executed.

At S410, whether chroma adjustment is enabled for NNLF is determined.

At S420, when chroma adjustment is enabled for NNLF, NNLF is performed on the reconstructed picture according to the NNLF method of any embodiment of the disclosure, where the NNLF method is applied to a decoding end and can use a chroma adjustment mode.

In the video decoding method of this embodiment, a better mode is selected according to the first flag from a mode in which the chroma information is adjusted and a mode in which the chroma information is not adjusted, which can enhance the filtering effect of NNLF and improve the quality of a decoded picture.

In an exemplary embodiment of the disclosure, when one or more of the following conditions are satisfied, it is determined that chroma adjustment is enabled for NNLF. A sequence-level chroma adjustment enable-flag is decoded, and it is determined according to the sequence-level chroma adjustment enable-flag that chroma adjustment is enabled for NNLF. A picture-level chroma adjustment enable-flag is decoded, and it is determined according to the picture-level chroma adjustment enable-flag that chroma adjustment is enabled for NNLF.

In an example of using the sequence-level chroma adjustment enable-flag, a sequence header of a video sequence is illustrated in the following table.

| sequence_header( ) { | Descriptor |
|---|---|
| ... ... | |
| ca_enable_flag | u(1) |
| | |
| ... ... | |
| } | |

In the table, ca_enable_flag is a sequence-level chroma adjustment enable-flag.

In an exemplary embodiment of the disclosure, the method further includes the following. When chroma adjustment is not enabled for NNLF, decoding of the first flag is skipped, and NNLF is performed on the reconstructed picture by using the first mode.

In this embodiment, the baseline tool NNLF1 is selected as a comparison. On the basis of NNLF1, a mode is selected for an inter coding picture (i.e., a non-I-picture), where the chroma adjustment mode is included. Under the common test conditions of random access and low delay B configurations, tests are conducted on common sequences specified by the JVET, and an anchor for the comparison is NNLF1. The results are illustrated in table 1 and table 2.

Table 1: performance of this embodiment compared with the baseline NNLF1 under the random access configuration

| | Random access Main10 | | | | |
|---|---|---|---|---|---|
| | Over AHG11 reference software (NnlfOption=1) | | | | |
| | Y | U | V | EncT | DecT |
| Class A1 | 0.05% | -2.42% | -0.70% | 107% | 100% |
| Class A2 | -0.01% | -1.18% | -0.31% | 108% | 100% |
| Class B | -0.03% | -1.21% | -0.58% | 108% | 101% |
| Class C | -0.02% | -0.63% | -0.73% | 106% | 101% |
| Class E | | | | | |
| **Overall** | -0.01% | -1.29% | -0.59% | 107% | 101% |
| Class D | -0.03% | -0.19% | -1.52% | 107% | 101% |
| Class F | -0.03% | -0.31% | -0.69% | 110% | 108% |

Table 2: performance of this embodiment compared with the baseline NNLF1 under the low delay B configuration

| | Low delay B Main10 | | | | |
| --- | --- | --- | --- | --- | --- |
| | Over AHG11 reference software (NnlfOption=1) | | | | |
| | Y | U | V | EncT | DecT |
| Class A1 | #VALUE! | #VALUE! | #VALUE! | #DIV/0! | #DIV/0! |
| Class A2 | #VALUE! | #VALUE! | #VALUE! | #DIV/0! | #DIV/0! |
| Class B | -0.13% | -2.67% | -0.72% | 107% | 103% |
| Class C | -0.11% | -2.31% | -1.81% | 105% | 102% |
| Class E | -0.05% | -1.10% | -1.83% | 111% | 105% |
| **Overall** | -0.10% | -2.51% | -1.20% | 107% | 103% |
| Class D | -0.10% | -1.95% | -4.61% | 107% | 102% |
| Class F | -0.11% | -1.52% | -2.46% | 110% | 106% |

The meanings of the parameters in the table are as follows.

EncT: encoding time, 10X% means that when the sorting technology for reference lines is integrated, the encoding time is 10X% compared with the encoding time before the integration, which means that the encoding time increases by X%.

DecT: decoding time, 10X% means that when the sorting technology for reference lines is integrated, the decoding time is 10X % compared with the decoding time before the integration, which means that the decoding time increases by X%.

ClassA1 and ClassA2 are test video sequences with a resolution of 3840×2160, ClassB is a test sequence with a resolution of 1920×1080, ClassC is a test sequence with a resolution of 832×480, ClassD is a test sequence with a resolution of 416×240, and ClassE is a test sequence with a resolution of 1280×720; ClassF represents several screen content sequences with different resolutions.

Y, U, and V represent three color components. The columns where Y, U, and V are located represent Bjontegaard-Delta rate (BD-rate) indicators of the test results on Y, U, and V. The smaller the value, the better the coding performance.

As can be seen from the analysis of data in the two tables, by means of introducing an optimization method for adjusting chroma information, the coding performance can be further improved on the basis of NNLF1, especially on the chroma components. The residual adjustment in this embodiment has little influence on the decoding complexity.

For an intra coding picture (an I-picture), an NNLF mode can also be selected according to the method of this embodiment.

A solution of adjusting chroma information when performing NNLF on the reconstructed picture is proposed in the foregoing embodiments. In a codec, orders of a U component and a V component of chroma information input to an NNLF filter are swapped, thereby further improving the coding performance of NNLF. This also shows that feature information of the U component is correlated with feature information of the V component to some extent. Currently, there is a lack of solutions to study the influence on an NNLF network model caused by adjusting the chroma information such as swapping input orders of U and V during training. After study, some examples of a training method for chroma fusion (or called chroma information fusion) are provided in embodiments of the disclosure. During model training, a strategy for chroma adjustment such as UV swapping is introduced to augment training data, which can further improve the performance of an NNLF model. In some embodiments of the disclosure, NNLF is also performed on the reconstructed picture by using an NNLF model trained based on the training method for chroma fusion, i.e., NNLF is performed by using the chroma fusion mode in the foregoing embodiments, so as to further optimize the performance of NNLF.

An NNLF filter (also called a chroma fusion module herein, referred to as a CF model) of a model trained based on the training method for chroma fusion can be implemented based on a baseline NNLF (such as NNLF1 and NNLF2) or implemented based on a new NNLF. When the CF module is implemented based on the baseline NNLF, it means that a model of the baseline NNLF is re-trained. When being implemented based on the new NNLF, the CF module can be trained based on a model with a new network structure to obtain a new model.

For a position of the chroma fusion (CF) module in the codec, reference can be made to FIG. 7, and the CF module can replace the NNLF-B filter in the figure. The use of the CF module does not depend on the switches of the DB, SAO, and ALF, i.e., whether the DB, SAO, and ALF are enabled or not.

At the encoding end, by comparing a rate-distortion cost for performing NNLF on the reconstructed picture by the NNLF-A filter and a rate-distortion cost for performing NNLF on the reconstructed picture by the (re-trained/new) NNLF-B filter trained with chroma fusion, which NNLF filter (corresponding to a different NNLF mode) to use is determined, and information of the selected NNLF mode is signalled into a bitstream for a decoder to read. At the decoding end, after the NNLF mode actually used by the encoding end is parsed out, NNLF is performed on the reconstructed picture by using the NNLF mode.

An NNLF method is further provided in an embodiment of the disclosure. The method is applied to a video decoding apparatus. As illustrated in FIG. 13, the method includes the following.

At S510, a first flag of a reconstructed picture is decoded, where the first flag contains information of an NNLF mode to be used when performing NNLF on the reconstructed picture.

At S520, the NNLF mode to be used when performing NNLF on the reconstructed picture is determined according to the first flag, and NNLF is performed on the reconstructed picture according to the determined NNLF mode.

The NNLF mode includes a first mode and a second mode. The second mode includes a chroma fusion mode. Training data for training a model used in the chroma fusion mode includes augmented data obtained after performing specified adjustment on chroma information of the reconstructed picture in original data or includes the original data and the augmented data.

Tests have shown that the use of a model trained with the augmented data obtained by adjusting the chroma information (i.e., the model used in the chroma fusion mode) can affect the filtering effect of NNLF and thus affect the coding performance. In this embodiment, an optimal mode can be selected from the chroma fusion mode and other modes according to a rate-distortion cost, thereby improving the coding performance.

In an exemplary embodiment of the disclosure, specified adjustment is performed on the chroma information of the reconstructed picture in the original data in any one or more of the following adjustment manners. Orders of two chroma components of the reconstructed picture in the original data are swapped. A weighted average value and a square error value of the two chroma components of the reconstructed picture in the original data are calculated, and the weighted average value and the square error value are determined as chroma information to be input in the NNLF mode.

In an exemplary embodiment of the disclosure, a model used in the first mode is trained using the original data (i.e., supplementary data obtained after chroma adjustment is not used as training data).

In an exemplary embodiment of the disclosure, the reconstructed picture is a reconstructed picture of a current picture or a current slice or a current block. The first flag is a picture-level syntax element or a block-level syntax element.

In an exemplary embodiment of the disclosure, the first mode includes one first mode, and the second mode includes one or more second modes. A network structure of a model used in the first mode is the same as or different from a network structure of a model used in the second mode.

In an exemplary embodiment of the disclosure, each second mode is the chroma fusion mode, and the first flag indicates whether the chroma fusion mode is to be used when performing NNLF on the reconstructed picture. The NNLF mode to be used when performing NNLF on the reconstructed picture is determined according to the first flag as follows. When the first flag indicates that the chroma fusion mode is to be used, it is determined that the second mode is to be used when performing NNLF on the reconstructed picture. When the first flag indicates that the chroma fusion mode is not to be used, it is determined that the first mode is to be used when performing NNLF on the reconstructed picture.

In an example of this embodiment, the second mode includes multiple second modes. The method further includes the following. When the first flag indicates that the chroma fusion mode is to be used, a second flag is further decoded, where the second flag contains index information of one second mode to be used among the multiple second modes. It is determined according to the second flag that the one second mode among the multiple second modes is to be used when performing NNLF on the reconstructed picture.

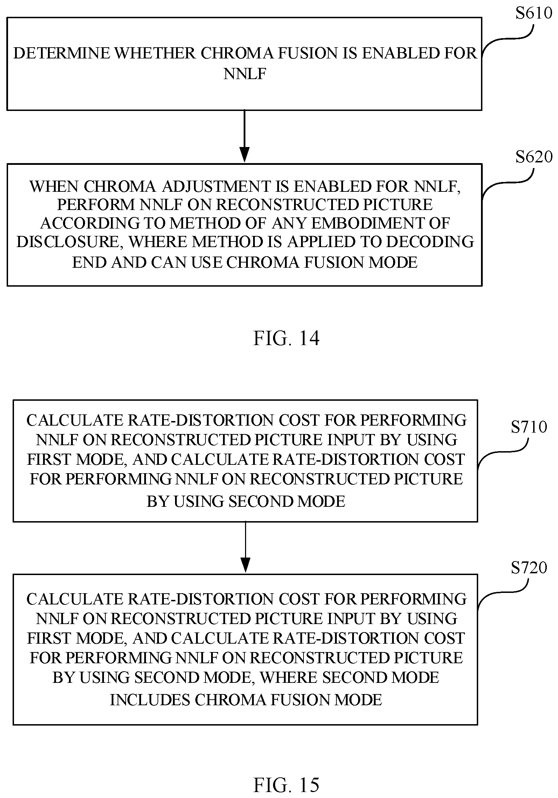

A video decoding method is further provided in an embodiment of the disclosure. The method is applied to a video decoding apparatus and includes the following. When performing NNLF on a reconstructed picture, as illustrated in FIG. 14, the following operations are executed.

At S610, whether chroma fusion is enabled for NNLF is determined.

At S620, when chroma fusion is enabled for NNLF, NNLF is performed on the reconstructed picture according to the method of any embodiment of the disclosure, where the method is applied to a decoding end and can use a chroma fusion mode.

In this embodiment, an optimal mode can be selected from the chroma fusion mode and other modes according to a rate-distortion cost, thereby improving the coding performance.

In an exemplary embodiment of the disclosure, when one or more of the following conditions are satisfied, it is determined that chroma fusion is enabled for NNLF. A sequence-level chroma fusion enable-flag is decoded, and it is determined according to the sequence-level chroma fusion enable-flag that chroma fusion is enabled for NNLF. A picture-level chroma fusion enable-flag is decoded, and it is determined according to the picture-level chroma fusion enable-flag that chroma fusion is enabled for NNLF.

In an example of this embodiment, a sequence header in the following table can be used.

| sequence_header( ) { | Descriptor |
|---|---|
| ... ... | |
| cf_enable_flag | u(1) |
| | |
| ... ... | |
| } | |

In the table, cf_enable_flag indicates a sequence-level chroma fusion enable-flag.

In an exemplary embodiment of the disclosure, when chroma fusion is not enabled for NNLF, decoding of a chroma fusion enable-flag is skipped, and NNLF is performed on the reconstructed picture by using the first mode.

In an example of this embodiment, a sequence header illustrated in the following table can be used.

| picture_header( ) { | Descriptor |
|---|---|
| ... ... | ... ... |
| if(cf_enable_flag) { | |
| picture_cf_enable_flag | u(1) |
| | |
| if(picture_cf_enable_flag) { | |
| picture_cf_ index | u(1) |
| } | |
| } | |
| | |
| ... ... | |
| } | |
| | ... ... |

In the table, cf_enable_flag is a sequence-level chroma fusion enable-flag. When cf_enable_flag is 1, the following semantics may be defined: picture_cf_enable_flag, indicating a picture-level chroma fusion enable-flag, i.e., the above first flag. When picture_cf_enable_flag is 1, it indicates that the chroma fusion mode is to be used when performing NNLF on the reconstructed picture. In the case where the chroma fusion mode includes multiple chroma fusion modes (for example, uses multiple models trained with the supplementary data), which chroma fusion mode to use is indicated by an index picture_cf_index. When picture_cf_enable_flag is 0, it indicates that the chroma fusion mode is not to be used when performing NNLF on the reconstructed picture, that is, the first mode is to be used. When cf_enable _flag is 0, decoding and encoding of picture_cf_enable _flag and picture_cf_index are skipped.

An NNLF method is further provided in an embodiment of the disclosure. The method is applied to a video encoding apparatus. As illustrated in FIG. 15, the method includes the following.

At 710, a rate-distortion cost for performing NNLF on a reconstructed picture input by using a first mode is calculated, and a rate-distortion cost for performing NNLF on the reconstructed picture by using a second mode is calculated.

At 720, NNLF is performed on the reconstructed picture by using a mode with a minimum rate-distortion cost between the first mode and the second mode.

The first mode and the second mode each are a set NNLF mode. The second mode includes a chroma fusion mode. Training data for training a model used in the chroma fusion mode includes augmented data obtained after performing specified adjustment on chroma information of the reconstructed picture in original data or includes the original data and the augmented data.

In this embodiment, an optimal mode can be selected from the chroma fusion mode and other modes according to a rate-distortion cost, thereby improving the coding performance.

In an exemplary embodiment of the disclosure, specified adjustment is performed on the chroma information in any one or more of the following adjustment manners. Orders of two chroma components of the reconstructed picture are swapped. A weighted average value and a square error value of the two chroma components of the reconstructed picture are calculated, and the weighted average value and the square error value are determined as chroma information to be input in the NNLF mode.

In an exemplary embodiment of the disclosure, a model used in the first mode is trained using the original data. The reconstructed picture is a reconstructed picture of a current picture or a current slice or a current block. A network structure of the model used in the first mode is the same as or different from a network structure of a model used in the second mode.

In an exemplary embodiment of the disclosure, the first mode includes one first mode, and the second mode includes one or more second modes. The rate-distortion cost $cost_1$ for performing NNLF on the reconstructed picture input by using the first mode is calculated as follows. A first filtered picture output after performing NNLF on the reconstructed picture by using the first mode is obtained, and $cost_1$ is calculated according to a difference between the first filtered picture and a corresponding original picture. The rate-distortion cost $cost_2$ for performing NNLF on the reconstructed picture by using the second mode is calculated as follows. For each of the one or more second modes, a second filtered picture output after performing NNLF on the reconstructed picture by using the second mode is obtained, and $cost_2$ of the second mode is calculated according to a difference between the second filtered picture and the corresponding original picture. When the second mode includes multiple second modes, $cost_2$ of the multiple second modes is compared with $cost_1$ of the first mode to determine the minimum rate-distortion cost.

In an exemplary embodiment of the disclosure, the method further includes the following. A filtered picture obtained by performing NNLF on the reconstructed picture by using the mode with the minimum rate-distortion cost is determined as a filtered picture output after performing NNLF on the reconstructed picture.

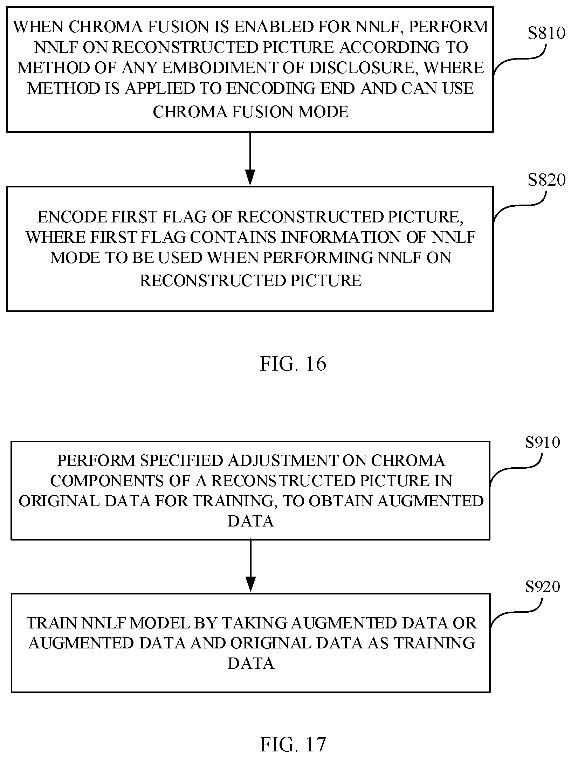

A video encoding method is further provided in an embodiment of the disclosure. The method is applied to a video encoding apparatus and includes the following. When performing NNLF on a reconstructed picture, as illustrated in FIG. 16, the following operations are executed.

At 810, when chroma fusion is enabled for NNLF, NNLF is performed on the reconstructed picture according to the method of any embodiment of the disclosure, where the method is applied to an encoding end and can use a chroma fusion mode.

At 820, a first flag of the reconstructed picture is encoded, where the first flag contains information of an NNLF mode to be used when performing NNLF on the reconstructed picture.

In this embodiment, an optimal mode can be selected from the chroma fusion mode and other modes according to a rate-distortion cost, thereby improving the coding performance.

In an exemplary embodiment of the disclosure, the first flag is a picture-level syntax element or a block-level syntax element.

In an exemplary embodiment of the disclosure, when one or more of the following conditions are satisfied, it is determined that chroma fusion is enabled for NNLF. A sequence-level chroma fusion enable-flag is decoded, and it is determined according to the sequence-level chroma fusion enable-flag that chroma fusion is enabled for NNLF. A picture-level chroma fusion enable-flag is decoded, and it is determined according to the picture-level chroma fusion enable-flag that chroma fusion is enabled for NNLF.

In an exemplary embodiment of the disclosure, the method further includes the following. When it is determined that chroma fusion is not enabled for NNLF, NNLF is performed on the reconstructed picture by using the first mode, and encoding of a chroma fusion enable-flag is skipped.

A video encoding method is further provided in an embodiment of the disclosure, which can be implemented in an NNLF filter at an encoding end. When the encoding end proceeds to the NNLF process, the encoding end executes the following operations.

Step a), whether a chroma fusion mode is enabled for NNLF in a current sequence is determined according to a sequence-level chroma fusion enable-flag cf_enable_flag. If cf_enable_flag is "1", then attempt to perform NNLF on the current sequence by using the chroma fusion mode, and proceed to step b). If cf_enable _flag is "0", then NNLF is performed by using the first mode, encoding of a first flag is skipped, and the process ends.

Step b), for a reconstructed picture of a current picture of the current sequence, NNLF is performed on the reconstructed picture by using the first mode, for example, information is input to a model of a baseline NNLF filter to obtain a first filtered picture output by the filter.

Step c), for the reconstructed picture of the current picture of the current sequence, NNLF is performed on the reconstructed picture by using the chroma fusion mode, that is, encoded information is input to a (re-trained/new) NNLF model in the chroma fusion mode to obtain a second filtered picture output by the filter.

Step d), a rate-distortion cost $C_{NNLF}$ is calculated according to a difference between the first filtered picture and an original picture, and a rate-distortion cost $C_{CF}$ is calculated according to a difference between the second filtered picture and the original picture. The two rate-distortion costs are compared. If $C_{CF} < C_{NNLF}$, it is determined to perform NNLF on the reconstructed picture by using the chroma fusion mode, i.e., the second mode, and the second filtered picture is determined as a filtered picture which is finally output after performing NNLF on the reconstructed picture. If $C_{CF} \geq$

$C_{NNLF}$, it is determined to perform NNLF on the reconstructed picture by using the first mode, and the first filtered picture is determined as a filtered picture which is finally output after performing NNLF on the reconstructed picture.

If there are multiple chroma fusion modes (the above chroma adjustment and fusion mode is also a chroma fusion mode), multiple $C_{CF}$ will be compared.

Step e), a first flag picture_cf_enable_flag of the reconstructed picture of the current picture is signalled into a bitstream. If there are multiple chroma fusion modes, an index picture_cf_index indicating a chroma fusion mode to be used is further signalled into the bitstream.

If the current picture has been processed, a next picture is loaded for processing. Similarly, a current slice of the current picture or a current block in the current picture may also be processed as described above.

In some embodiments of the disclosure, the same UV-swapping adjustment strategy is also introduced during training of an NNLF model, in which the NNLF model is trained by swapping input orders of U and V As above mentioned, training the NNLF model by swapping the input orders of U and V can be implemented based on a baseline NNLF or based on a new NNLF. The main difference lies in different NNLF network structures, which has no influence on model training, and NNLF_VAR is uniformly used herein for description. For an NNLF_VAR model, improvements have been made in both training and coding testing in embodiments of the disclosure.

A training method for an NNLF model is provided in an embodiment of the disclosure. As illustrated in FIG. 17, the method includes the following.

At 910, specified adjustment is performed on chroma components of a reconstructed picture in original data for training, to obtain augmented data.

At 920, the NNLF model is trained by taking the augmented data or the augmented data and the original data as training data.

In an exemplary embodiment of the disclosure, specified adjustment is performed on chroma information of the reconstructed picture in the original data in any one or more of the following adjustment manners. Orders of two chroma components of the reconstructed picture in the original data are swapped. A weighted average value and a square error value of the two chroma components of the reconstructed picture in the original data are calculated, and the weighted average value and the square error value are determined as chroma information to be input in an NNLF mode.

In an exemplary embodiment of the disclosure, for a certain NNLF_VAR, an arrangement order of information input to a network may be {recY, recU, recV, predY, predU, predV, baseQP, sliceQP, slicetype, ... }. Therefore, the above data need to be collected through coding testing and be aligned with label data of an original picture. The above data are sequentially organized and packaged into a data-pair patchA {train, label} as training data for the network. For example, a data form of patchA, i.e., the original data, is illustrated in the following pseudo code.

```
patchA:
{
train: {recY, recU, recV, predY, predU, predV, baseQP, sliceQP, slicetype, ... }
label: {orgY, orgU, orgV}
}
```

By means of introducing a concept of chroma fusion, input orders of U and V can be swapped. Therefore, in this embodiment, the training data are augmented (patchB, i.e., supplementary data, is added based on the original patchA), and the augmented data-pair patch is illustrated in the following pseudo code.

```
patchA:
{
train: {recY, recU, recV, predY, predU, predV, baseQP, sliceQP, slicetype, ... }
label: {orgY, orgU, orgV} how to obtain?
}
patchB:
{
train: {recY, recV, recU, predY, predV, predU, baseQP, sliceQP, slicetype, ... }
label: {orgY, orgV, orgU}
}
```

As can be seen, for the augmented patchB, input positions of data of U and V are swapped, and corresponding positions of the label data also need to be swapped.

In this embodiment, both the original data and the supplementary data are used as the training data. In other embodiments, only the supplementary data may be used as the training data for training of an NNLF mode in a chroma fusion mode.

In terms of performing NNLF on the reconstructed picture by using a mode (i.e., the NNLF mode) in the chroma fusion mode, input chroma information may be adjusted, for example, orders of U and V are swapped (in this case, the above chroma adjustment and fusion mode is used), and the input and output are illustrated in FIG. 12B. Alternatively, the input chroma information may not be adjusted (in this case, a non-chroma-adjustment mode is used), and the input and output are illustrated in FIG. 12A.

In the training stage, NNLF_VAR is trained according to the augmented training data generated in (1) herein. The specific training process is similar to the training process of the existing NNLF, and a multi-round training mode is used, which will not be repeated herein.

After training of the NNLF model is completed, the NNLF model is deployed in a codec for coding testing. As above mentioned, for a network model obtained through chroma fusion training, input and output information of the network model in a chroma fusion mode of UV swapping has a different form from input and output information of the network model in a mode of UV non-swapping. During coding testing, these two modes can be used separately, and their respective rate-distortion costs can be calculated separately. By comparing these two rate-distortion costs with a rate-distortion cost for the first mode (i.e., for the baseline NNLF), whether to use the chroma fusion mode and which chroma fusion mode to use (when the chroma fusion mode is to be used) can be determined.

A training method for an NNLF mode with chroma fusion (where training data at least includes supplementary data) is proposed in an embodiment of the disclosure. For a U component and a V component of chroma information input to an NNLF filter, a swapping adjustment strategy is used for training and coding testing of NNLF, thereby further optimizing the performance of NNLF.

In the above embodiment, for the Y, U, and V components, a joint rate-distortion cost is used to make a determination, and thus the three components share one first flag (or first flag and index). In other embodiments, a more refined operation may also be executed, where different first flags (or first flags and indexes) may be set for different components. For example, syntax elements in this method are illustrated in the following table.

| picture_header( ) { | Descriptor |
|---|---|
| ... ... | ... ... |
| if(cf_enable_flag) { | |
| for (compIdx=0; compIdx<3; compIdx++) { | |
| picture_cf_enable_flag[compIdx] | u(1) |
| | |
| if(picture_cf_enable_flag[compIdx]) { | |
| picture_cf_index[compIdx] | ue(v) |
| } | |
| } | |
| } | |
| ... ... | |
| } | |
| | ... ... |

When a sequence-level chroma fusion enable-flag cf_enable _flag is 1, the following semantics may be defined: a picture-level chroma fusion enable-flag picture_cf_enable_flag[compIdx].

When the picture-level chroma fusion enable-flag picture_cf_enable_flag[compIdx] is 1, the following semantics may be defined: an index of a picture-level chroma fusion method picture_cf_index[compIdx]

A bitstream is further provided in an embodiment of the disclosure. The bitstream is generated according to the video encoding method of any embodiment of the disclosure.

A neural network based loop filter is further provided in an embodiment of the disclosure. As illustrated in FIG. 11, the neural network based loop filter includes a processor and a memory storing a computer program. When executing the computer program, the processor can implement the neural network based loop filtering method of any embodiment of the disclosure. As illustrated in the figure, the processor and the memory are connected via a system bus, and the loop filter may further include other components such as an internal storage and a network interface.

A video decoding apparatus is further provided in an embodiment of the disclosure. As illustrated in FIG. 11, the video decoding apparatus includes a processor and a memory storing a computer program. When executing the computer program, the processor implements the video decoding method of any embodiment of the disclosure.

A video encoding apparatus is further provided in an embodiment of the disclosure. As illustrated in FIG. 11, the video encoding apparatus includes a processor and a memory storing a computer program. When executing the computer program, the processor can implement the video encoding method of any embodiment of the disclosure.

The processor of the above embodiments of the disclosure may be a general-purpose processor, including a central processing unit (CPU), a network processor (NP for short), a microprocessor, etc., or other conventional processors, etc. The processor may also be a digital signal processor (DSP), an application-specific integrated circuit (ASIC), a field programmable gate array (FPGA), discrete logic or other programmable logic devices, discrete gate or transistor logic devices, discrete hardware components, or other equivalent integrated or discrete logic circuits, or a combination of the above devices. That is, the processor of the above embodiments may be any processing device or device combination that can implement various methods, steps, and logic block diagrams disclosed in the embodiments of the disclosure. If the embodiments of the disclosure are partially implemented in software, the instructions for the software may be stored in a suitable non-volatile computer-readable storage medium, and one or more processors in hardware may be used to execute the instructions to implement the methods of the embodiments of the disclosure. The term "processor" used herein may refer to the above structure or any other structure suitable for implementing the technology described herein.

A video coding system is further provided in an embodiment of the disclosure. As illustrated in FIG. 1A, the video coding system includes the video encoding apparatus of any embodiment of the disclosure and the video decoding apparatus of any embodiment of the disclosure.

A non-transitory computer-readable storage medium is further provided in an embodiment of the disclosure. The computer-readable storage medium stores a computer program. The computer program, when executed by a processor, can implement the neural network based loop filtering method of any embodiment of the disclosure, the video decoding method of any embodiment of the disclosure, or the video encoding method of any embodiment of the disclosure.

In one or more of the above exemplary embodiments, the functions described may be implemented in hardware, software, firmware, or any combination thereof. If implemented in software, the functions as one or more instructions or codes may be stored in a computer-readable medium or transmitted via a computer-readable medium, and executed by a hardware-based processing unit. The computer-readable medium may include a tangible medium such as a data storage medium, or any communication medium that facilitates a computer program being transmitted from one place to another according to a communication protocol for example. In this way, the computer-readable medium may be generally a non-transitory tangible computer-readable storage medium or a communication medium such as a signal or carrier wave. A data storage medium may be any available medium that can be accessed by one or more computers or one or more processors to retrieve instructions, codes, and/or data structures for implementing the technology described in the disclosure. A computer program product may include a computer-readable medium.

By way of example and not limitation, such computer-readable storage media may include a random access memory (RAM), a read only memory (ROM), an electrically erasable programmable read only memory (EEPROM), a compact disk ROM (CD-ROM) or other optical disk storage devices, magnetic disk storage devices or other magnetic storage devices, a flash memory, or any other medium that can be used to store desired program codes in the form of instructions or data structures and can be accessed by a computer. Moreover, any connection may also be referred to as a computer-readable medium. For example, if instructions are transmitted from a website, server, or other remote source using a coaxial cable, a fiber optic cable, a twisted pair, a digital subscriber line (DSL), or wireless technology such as infrared, radio, and microwaves, then the coaxial cable, the fiber optic cable, the twisted pair, the DSL, or the wireless technology such as infrared, radio, and microwaves are included in the definition of medium. However, it may be understood that the computer-readable storage medium and data storage medium do not include connection, carrier, signal, or other transitory media, but are directed to a non-transitory tangible storage medium. As used herein, disks and optical disks include CDs, laser optical disks, optical disks, digital versatile disks (DVDs), floppy disks, or Blu-ray disks, etc., where disks typically reproduce data magnetically, and optical disks use lasers to reproduce data optically. Combinations of the above shall also be included within the scope of the computer-readable medium.

**Claims**

1. A neural network based loop filtering (NNLF) method, applied to a video decoding apparatus and comprising:

    decoding a first flag of a reconstructed picture, wherein the first flag contains information of an NNLF mode to be used when performing NNLF on the reconstructed picture; and
    determining, according to the first flag, the NNLF mode to be used when performing NNLF on the reconstructed picture; and performing NNLF on the reconstructed picture according to the determined NNLF mode, wherein the NNLF mode comprises a first mode and a second mode, the second mode comprises a chroma fusion mode, and training data for training a model used in the chroma fusion mode comprises augmented data obtained after performing specified adjustment on chroma information of the reconstructed picture in original data or comprises the original data and the augmented data.

2. The method of claim 1, wherein performing specified adjustment on the chroma information of the reconstructed picture in the original data comprises any one or more of:

swapping orders of two chroma components of the reconstructed picture in the original data; or
calculating a weighted average value and a square error value of the two chroma components of the reconstructed picture in the original data, and determining the weighted average value and the square error value as chroma information to be input in the NNLF mode.

3. The method of claim 1, wherein

a model used in the first mode is trained using the original data; and
the reconstructed picture is a reconstructed picture of a current picture or a current slice or a current block; and the first flag is a picture-level syntax element or a block-level syntax element.

4. The method of claim 1, wherein

the first mode comprises one first mode, and the second mode comprises one or more second modes; and
a network structure of a model used in the first mode is the same as or different from a network structure of a model used in the second mode.

5. The method of claim 1, wherein

each second mode is the chroma fusion mode; and the first flag indicates whether the chroma fusion mode is to be used when performing NNLF on the reconstructed picture; and
determining, according to the first flag, the NNLF mode to be used when performing NNLF on the reconstructed picture comprises:

in response to the first flag indicating that the chroma fusion mode is to be used, determining that the second mode is to be used when performing NNLF on the reconstructed picture; and
in response to the first flag indicating that the chroma fusion mode is not to be used, determining that the first mode is to be used when performing NNLF on the reconstructed picture.

6. The method of claim 5, wherein

the second mode comprises a plurality of second modes; and
the method further comprises:

in response to the first flag indicating that the chroma fusion mode is to be used, decoding a second flag, wherein the second flag contains index information of one second mode to be used among the plurality of second modes; and
determining, according to the second flag, that the one second mode among the plurality of second modes is to be used when performing NNLF on the reconstructed picture.

7. A video decoding method, applied to a video decoding apparatus and comprising:
in response to performing neural network based loop filtering (NNLF) on a reconstructed picture, executing the following operations:
in response to chroma fusion being enabled for NNLF, performing NNLF on the reconstructed picture according to the method of any one of claims 1 to 6.

8. The method of claim 7, comprising:
determining that chroma fusion is enabled for NNLF, in response to one or more of the following conditions being satisfied:

decoding a sequence-level chroma fusion enable-flag, and determining according to the sequence-level chroma fusion enable-flag that chroma fusion is enabled for NNLF; or
decoding a picture-level chroma fusion enable-flag, and determining according to the picture-level chroma fusion enable-flag that chroma fusion is enabled for NNLF.

**9.** The method of claim 7, further comprising:
in response to chroma fusion being not enabled for NNLF, skipping decoding of a chroma fusion enable-flag, and performing NNLF on the reconstructed picture by using the first mode.

**10.** A neural network based loop filtering (NNLF) method, applied to a video encoding apparatus and comprising:

calculating a rate-distortion cost for performing NNLF on a reconstructed picture input by using a first mode, and calculating a rate-distortion cost for performing NNLF on the reconstructed picture by using a second mode; and determining to perform NNLF on the reconstructed picture by using a mode with a minimum rate-distortion cost between the first mode and the second mode, wherein
the first mode and the second mode each are a set NNLF mode, the second mode comprises a chroma fusion mode, and training data for training a model used in the chroma fusion mode comprises augmented data obtained after performing specified adjustment on chroma information of the reconstructed picture in original data or comprises the original data and the augmented data.

**11.** The method of claim 10, wherein performing specified adjustment on the chroma information comprises any one or more of:

swapping orders of two chroma components of the reconstructed picture; or
calculating a weighted average value and a square error value of the two chroma components of the reconstructed picture, and determining the weighted average value and the square error value as chroma information to be input in the set NNLF mode.

**12.** The method of claim 10, wherein

a model used in the first mode is trained using the original data; and
the reconstructed picture is a reconstructed picture of a current picture or a current slice or a current block; and a network structure of the model used in the first mode is the same as or different from a network structure of a model used in the second mode.

**13.** The method of claim 10, wherein

the first mode comprises one first mode, and the second mode comprises one or more second modes;
calculating the rate-distortion cost $cost_1$ for performing NNLF on the reconstructed picture input by using the first mode comprises:
obtaining a first filtered picture output after performing NNLF on the reconstructed picture by using the first mode, and calculating $cost_1$ according to a difference between the first filtered picture and a corresponding original picture; and
calculating the rate-distortion cost $cost_2$ for performing NNLF on the reconstructed picture by using the second mode comprises:
for each of the one or more second modes, obtaining a second filtered picture output after performing NNLF on the reconstructed picture by using the second mode, and calculating $cost_2$ of the second mode according to a difference between the second filtered picture and the corresponding original picture.

**14.** A video encoding method, applied to a video encoding apparatus and comprising:
in response to performing neural network based loop filtering (NNLF) on a reconstructed picture, executing the following operations:

in response to chroma fusion being enabled for NNLF, performing NNLF on the reconstructed picture according to the method of any one of claims 10 to 13; and
encoding a first flag of the reconstructed picture, wherein the first flag contains information of an NNLF mode to be used when performing NNLF on the reconstructed picture.

**15.** The method of claim 14, wherein
the first flag is a picture-level syntax element or a block-level syntax element.

**16.** The method of claim 14, comprising:
determining that chroma fusion is enabled for NNLF, in response to one or more of the following conditions being satisfied:

decoding a sequence-level chroma fusion enable-flag, and determining according to the sequence-level chroma fusion enable-flag that chroma fusion is enabled for NNLF; or
decoding a picture-level chroma fusion enable-flag, and determining according to the picture-level chroma fusion enable-flag that chroma fusion is enabled for NNLF.

17. The method of claim 14, further comprising:
in response to determining that chroma fusion is not enabled for NNLF, performing NNLF on the reconstructed picture by using the first mode, and skipping encoding of a chroma fusion enable-flag.

18. The method of claim 14, wherein

each second mode is the chroma fusion mode; and the first flag indicates whether the chroma fusion mode is to be used when performing NNLF on the reconstructed picture; and
encoding the first flag of the reconstructed picture comprises:

in response to performing NNLF on the reconstructed picture by using the first mode, setting the first flag to a value indicating that the chroma fusion mode is not to be used; and
in response to performing NNLF on the reconstructed picture by using the second mode, setting the first flag to a value indicating that the chroma fusion mode is to be used.

19. The method of claim 18, wherein

the second mode comprises a plurality of second modes; and
encoding the first flag of the reconstructed picture further comprises:
after the first flag is set to the value indicating that the chroma fusion mode is to be used, encoding a second flag, wherein the second flag contains index information of one second mode with a minimum rate-distortion cost among the plurality of second modes.

20. A bitstream generated according to the video encoding method of any one of claims 14 to 19.

21. A neural network based loop filter, comprising:

a memory configured to store a computer program; and
a processor configured to implement the neural network based loop filtering method of any one of claims 1 to 6 and 10 to 13 when executing the computer program.

22. A video decoding apparatus, comprising:

a memory configured to store a computer program; and
a processor configured to implement the video decoding method of any one of claims 7 to 9 when executing the computer program.

23. A video encoding apparatus, comprising:

a memory configured to store a computer program; and
a processor configured to implement the video encoding method of any one of claims 14 to 19 when executing the computer program.

24. A video coding system, comprising the video encoding apparatus of claim 23 and the video decoding apparatus of claim 22.

25. A non-transitory computer-readable storage medium configured to store a computer program which, when executed by a processor, is operable to implement the neural network based loop filtering method of any one of claims 1 to 6 and 10 to 13, or implement the video decoding method of any one of claims 7 to 9, or implement the video encoding method of any one of claims 14 to 19.

26. A training method for a neural network based loop filtering (NNLF) model, comprising:

  performing specified adjustment on chroma components of a reconstructed picture in original data for training, to obtain augmented data; and
  training the NNLF model by taking the augmented data or the augmented data and the original data as training data.

27. The method of claim 26, wherein performing specified adjustment on chroma information of the reconstructed picture in the original data comprises any one or more of:

  swapping orders of two chroma components of the reconstructed picture in the original data; or
  calculating a weighted average value and a square error value of the two chroma components of the reconstructed picture in the original data, and determining the weighted average value and the square error value as chroma information to be input in an NNLF mode.

FIG. 1A

VIDEO ENCODING
APPARATUS 10

PARTITION
UNIT 101

VIDEO
DATA

PREDICTION UNIT 100

INTER
PREDICTION
UNIT
121

INTRA
PREDICTION
UNIT
126

102

+

−

TRANSFORM
UNIT
104

QUANTIZATION
UNIT
106

112

+

+

INVERSE
TRANSFORM
UNIT 110

INVERSE
QUANTIZATION
UNIT
108

FILTER UNIT
113

ENTROPY
CODING
UNIT
115

DECODED
PICTURE
BUFFER 114

ENCODED
VIDEO
BITSTREAM

FIG. 1B

VIDEO DECODING
APPARATUS
**15**

ENCODED
VIDEO
BITSTREAM

ENTROPY
DECODING
UNIT
150

PREDICTION
UNIT 152

INTER
PREDICTION
UNIT
162

INTRA
PREDICTION
UNIT
164

INVERSE
QUANTIZATION
UNIT
154

INVERSE
TRANSFORM
UNIT
155

**158**

FILTER
UNIT
159

DECODED
PICTURE
BUFFER
160

DECODED
VIDEO
SEQUENCE

FIG. 1C

RECONSTRUCTED
PICTURE

20

DBF

22

SAO

24

NNLF

26

ALF

FILTERED
RECONSTRUCTED
PICTURE

FIG. 2

RECONSTRUCTED
PICTURE
(rec_YUV)

PREDICTION
PICTURE
(pred_YUV)

BASE QP
(BaseQP)

SLICE QP
(SliceQP)

SLICE TYPE
(SliceType)

Conv
3×3×k×k
ReLU

Conv
3×3×k×k
ReLU

cat

Conv
1×1×k×k
ReLU

Conv
3×3×k

N RESIDUAL BLOCKS
(ResBlock)

Conv
3×3×k×4

PIXEL SHUFFLE
(PixelShuffle)

FILTERED
PICTURE
(Output_YUV)

FIG. 3A

FIG. 3B

INPUT
(rec_YUV) → NNLF1 MODEL → OUTPUT
(out_YUV)

FIG. 3C

FIG. 4A

FIG. 4B

INPUT
(rec_Y) → NNLF2 MODEL 1 → OUTPUT (out_Y)

INPUT
(rec_UV)
AUXILIARY INPUT
(rec_Y) → NNLF2 MODEL 2 → OUTPUT (out_UV)

FIG. 4C

FIG. 5

CALCULATE RATE-DISTORTION COST FOR PERFORMING NNLF ON RECONSTRUCTED PICTURE INPUT BY USING FIRST MODE, AND CALCULATE RATE-DISTORTION COST FOR PERFORMING NNLF ON RECONSTRUCTED PICTURE BY USING SECOND MODE — S110

PERFORM NNLF ON RECONSTRUCTED PICTURE BY USING MODE WITH MINIMUM RATE-DISTORTION COST BETWEEN FIRST MODE AND SECOND MODE, WHERE SECOND MODE INCLUDES CHROMA ADJUSTMENT MODE — S120

FIG. 6

RECONSTRUCTED
PICTURE

DBF

SAO

NNLF-A          NNLF-B
                (RO)

ALF

LOOP-FILTERED
RECONSTRUCTED
PICTURE

FIG. 7

WHEN CHROMA ADJUSTMENT IS ENABLED FOR NNLF, PERFORM NNLF ON RECONSTRUCTED PICTURE ACCORDING TO NNLF METHOD OF ANY EMBODIMENT OF DISCLOSURE, WHERE NNLF METHOD IS APPLIED TO ENCODING END AND USES CHROMA ADJUSTMENT MODE

S210

ENCODE FIRST FLAG OF RECONSTRUCTED PICTURE, WHERE FIRST FLAG CONTAINS INFORMATION OF NNLF MODE TO BE USED WHEN PERFORMING NNLF ON RECONSTRUCTED PICTURE

S220

FIG. 8

DECODE FIRST FLAG OF RECONSTRUCTED PICTURE, WHERE FIRST FLAG CONTAINS INFORMATION OF NNLF MODE TO BE USED WHEN PERFORMING NNLF ON RECONSTRUCTED PICTURE

S310

DETERMINE, ACCORDING TO FIRST FLAG, NNLF MODE TO BE USED WHEN PERFORMING NNLF ON RECONSTRUCTED PICTURE, AND PERFORM NNLF ON RECONSTRUCTED PICTURE ACCORDING TO DETERMINED NNLF MODE

S320

FIG. 9

S210

DETERMINE WHETHER CHROMA ADJUSTMENT IS
ENABLED FOR NNLF

S220

WHEN CHROMA ADJUSTMENT IS ENABLED FOR NNLF,
PERFORM NNLF ON RECONSTRUCTED PICTURE
ACCORDING TO METHOD OF ANY EMBODIMENT OF
DISCLOSURE, WHERE METHOD IS APPLIED TO DECODING
END AND CAN USE CHROMA ADJUSTMENT MODE

FIG. 10

PROCESSOR

SYSTEM
BUS

INTERNAL
STORAGE

NETWORK
INTERFACE

OPERATING
SYSTEM

COMPUTER
PROGRAM

MEMORY

FIG. 11

recV
recU
recY

NNLF
MODEL

cnnV
cnnU
cnnY

FIG. 12A

recU
recV
recY

NNLF
MODEL

cnnU
cnnV
cnnY

FIG. 12B

DECODE FIRST FLAG OF RECONSTRUCTED PICTURE, WHERE FIRST FLAG CONTAINS INFORMATION OF NNLF MODE TO BE USED WHEN PERFORMING NNLF ON RECONSTRUCTED PICTURE

S510

DETERMINE, ACCORDING TO FIRST FLAG, NNLF MODE TO BE USED WHEN PERFORMING NNLF ON RECONSTRUCTED PICTURE, AND PERFORM NNLF ON RECONSTRUCTED PICTURE ACCORDING TO DETERMINED NNLF MODE, WHERE SECOND MODE INCLUDES CHROMA FUSION MODE

S520

FIG. 13

| | S610 |
|---|---|
| DETERMINE WHETHER CHROMA FUSION IS ENABLED FOR NNLF | |

| | S620 |
|---|---|
| WHEN CHROMA ADJUSTMENT IS ENABLED FOR NNLF, PERFORM NNLF ON RECONSTRUCTED PICTURE ACCORDING TO METHOD OF ANY EMBODIMENT OF DISCLOSURE, WHERE METHOD IS APPLIED TO DECODING END AND CAN USE CHROMA FUSION MODE | |

FIG. 14

| | S710 |
|---|---|
| CALCULATE RATE-DISTORTION COST FOR PERFORMING NNLF ON RECONSTRUCTED PICTURE INPUT BY USING FIRST MODE, AND CALCULATE RATE-DISTORTION COST FOR PERFORMING NNLF ON RECONSTRUCTED PICTURE BY USING SECOND MODE | |

| | S720 |
|---|---|
| CALCULATE RATE-DISTORTION COST FOR PERFORMING NNLF ON RECONSTRUCTED PICTURE INPUT BY USING FIRST MODE, AND CALCULATE RATE-DISTORTION COST FOR PERFORMING NNLF ON RECONSTRUCTED PICTURE BY USING SECOND MODE, WHERE SECOND MODE INCLUDES CHROMA FUSION MODE | |

FIG. 15

WHEN CHROMA FUSION IS ENABLED FOR NNLF, PERFORM NNLF ON RECONSTRUCTED PICTURE ACCORDING TO METHOD OF ANY EMBODIMENT OF DISCLOSURE, WHERE METHOD IS APPLIED TO ENCODING END AND CAN USE CHROMA FUSION MODE    S810

ENCODE FIRST FLAG OF RECONSTRUCTED PICTURE, WHERE FIRST FLAG CONTAINS INFORMATION OF NNLF MODE TO BE USED WHEN PERFORMING NNLF ON RECONSTRUCTED PICTURE    S820

FIG. 16

PERFORM SPECIFIED ADJUSTMENT ON CHROMA COMPONENTS OF A RECONSTRUCTED PICTURE IN ORIGINAL DATA FOR TRAINING, TO OBTAIN AUGMENTED DATA    S910

TRAIN NNLF MODEL BY TAKING AUGMENTED DATA OR AUGMENTED DATA AND ORIGINAL DATA AS TRAINING DATA    S920

FIG. 17

## INTERNATIONAL SEARCH REPORT

| International application No. |
| --- |
| **PCT/CN2022/125230** |

**A.    CLASSIFICATION OF SUBJECT MATTER**

H04N19/82(2014.01)i

According to International Patent Classification (IPC) or to both national classification and IPC

**B.    FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT, DWPI, ENTXT, WPABS, WPABSC, CNABS, VVC: 环路滤波, 色度, 神经网络, 训练, 亮度, 调整, 扩展, 率失真, 均方误差, 平均绝对误差, brightness, chroma, filter, loop, neural network, NNLF, adjustment, expansion, rate distortion, mean squared error, average absolute error, YUV

**C.    DOCUMENTS CONSIDERED TO BE RELEVANT**

| Category* | Citation of document, with indication, where appropriate, of the relevant passages | Relevant to claim No. |
| --- | --- | --- |
| X | CN 114208203 A (INTEL CORP.) 18 March 2022 (2022-03-18) description, paragraphs 58-72 and 161-163 | 26 |
| A | CN 112019854 A (PEKING UNIVERSITY) 01 December 2020 (2020-12-01) entire document | 1-27 |
| A | CN 114845101 A (BEIJING DAJIA INTERNET INFORMATION TECHNOLOGY CO., LTD.) 02 August 2022 (2022-08-02) entire document | 1-27 |
| A | WO 2020062074 A1 (HANGZHOU HIKVISION DIGITAL TECHNOLOGY CO., LTD.) 02 April 2020 (2020-04-02) entire document | 1-27 |
| A | WO 2022072659 A1 (BEIJING DAJIA INTERNET INFORMATION TECHNOLOGY CO., LTD.) 07 April 2022 (2022-04-07) entire document | 1-27 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 June 2023** | **20 June 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/125230** |

| C. | DOCUMENTS CONSIDERED TO BE RELEVANT | |
| --- | --- | --- |
| Category* | Citation of document, with indication, where appropriate, of the relevant passages | Relevant to claim No. |
| A | WANG, Hongtao et al. "AHG11: Neural Network-based In-Loop Filter" *Joint Video Experts Team (JVET) of ITU-T SG 16 WP 3 and ISO/IEC JTC 1/SC 29 20th Meeting, by teleconference, 7-16 Oct. 2020 JVET-T0079-V3,* 16 October 2020 (2020-10-16), entire document | 1-27 |

Form PCT/ISA/210 (second sheet) (July 2022)

**INTERNATIONAL SEARCH REPORT**
Information on patent family members

International application No.

**PCT/CN2022/125230**

| Patent document cited in search report | | | Publication date (day/month/year) | Patent family member(s) | | | Publication date (day/month/year) |
|---|---|---|---|---|---|---|---|
| CN | 114208203 | A | 18 March 2022 | WO | 2021051369 | A1 | 25 March 2021 |
| | | | | US | 2022295116 | A1 | 15 September 2022 |
| CN | 112019854 | A | 01 December 2020 | | None | | |
| CN | 114845101 | A | 02 August 2022 | US | 2022337824 | A1 | 20 October 2022 |
| WO | 2020062074 | A1 | 02 April 2020 | | None | | |
| WO | 2022072659 | A1 | 07 April 2022 | | None | | |

Form PCT/ISA/210 (patent family annex) (July 2022)